# EUROPÄISCHE PATENTSCHRIFT

(11) **EP 2 720 094 B1**
(45) Veröffentlichungstag und Bekanntmachung des Hinweises auf die Patenterteilung: **20.05.2015**
(21) Anmeldenummer: 12187981.1
(22) Anmeldetag: 10.10.2012
(51) Int. Cl.: G05B 9/02, G05B 19/042, H01H 47/00, H01H 71/50

(54) **Sicherheitssystem**
Safety system
Système de sécurité

(43) Veröffentlichungstag der Anmeldung: 16.04.2014
(73) Patentinhaber: SICK AG, 79183 Waldkirch/Breisgau (DE)
(72) Erfinder: Dold, Franz Josef, 78120 Furtwangen (DE)
(74) Vertreter: Manitz, Finsterwald & Partner GbR

(56) Entgegenhaltungen:
- EP-A2- 1 363 306
- DE-A1-102008 032 823
- DE-A1-102011 016 137
- US-A1- 2006 244 619

## Beschreibung

Die vorliegende Erfindung betrifft ein Sicherheitssystem, welches beispielsweise zur Erkennung eines Gefahrenfalls bei einer sicherheitskritischen Anlage oder Maschine und zur Durchführung einer Sicherheitsabschaltung im Gefahrenfall einsetzbar ist.

Ein derartiges Sicherheitssystem umfasst typischerweise eine z.B. als Sicherheitssteuerung ausgebildete Sicherheitseinheit mit einem Ausgang und einem Sicherheitseingang und mit wenigstens einem ein Schutzgerät aufweisenden bzw. durch ein Schutzgerät gebildeten Sicherheitsteilnehmer. Dabei bildet eine mit dem Ausgang und dem Sicherheitseingang verbundene Testsignalleitung bzw. Busleitung zusammen mit dem Sicherheitsteilnehmer einen Testsignalpfad zur Übertragung eines von der Sicherheitseinheit erzeugten Testsignals. Ein in einem solchen Sicherheitssystem verwendeter Sicherheitsteilnehmer weist üblicherweise wenigstens einen in dem Testsignalpfad angeordneten unterbrechbaren Signalübertragungspfad auf und ist dazu ausgebildet, bei Vorliegen bzw. Eintreten eines nicht sicheren Zustands eine Unterbrechung des unterbrechbaren Signalübertragungspfads und damit eine Unterbrechung des Testsignalpfads zu bewirken. Da der Testsignalpfad den unterbrechbaren Signalübertragungspfad als direkten Übertragungsweg für das Testsignal nutzt, bleibt infolge einer solchen Unterbrechung das erwartete Testsignal an dem Sicherheitseingang der Sicherheitseinheit aus. Die Sicherheitseinheit kann dann eine Sicherheitsmaßnahme ergreifen und zum Beispiel die Stromzufuhr zu der sicherheitskritischen Anlage unterbrechen und diese dadurch abschalten, wodurch das Sicherheitssystem seine Sicherheitsfunktion erfüllt.

Um besonders hohen Anforderungen an die erreichte Sicherheit zu genügen, werden häufig mehrkanalige, insbesondere zweikanalige, Sicherheitsteilnehmer bzw. Schutzgeräte eingesetzt, d.h. Sicherheitsteilnehmer mit einem ersten und einem zweiten unterbrechbaren Signalübertragungspfad, die bei dem Eintreten eines nicht sicheren Zustands des Schutzgeräts gemeinsam unterbrochen werden. Das Sicherheitssystem kann so eingerichtet sein, dass bereits die Unterbrechung eines der beiden unterbrechbaren Signalübertragungspfade zu einer Sicherheitsabschaltung führt, so dass im Ergebnis eine Redundanz der durch den Sicherheitsteilnehmer bereitgestellten Schutzfunktion geschaffen wird.

Ein Sicherheitssystem kann prinzipiell auch mehrere Sicherheitsteilnehmer aufweisen, die jeweils einen oder mehrere unterbrechbare Signalübertragungspfade aufweisen können und die z.B. an der sicherheitskritischen Anlage örtlich verteilt angeordnet sein können, wobei ein nicht sicherer Zustand eines beliebigen Sicherheitsteilnehmers und eine damit einhergehende Unterbrechung eines entsprechenden Signalübertragungspfads jeweils zu dem Auslösen der Sicherheitsfunktion führen soll. Die Bereitstellung eines solchen Sicherheitssystems ist mit einem sehr hohen Verkabelungsaufwand verbunden, wenn jeder Sicherheitsteilnehmer oder sogar jeder unterbrechbare Signalübertragungspfad jedes Sicherheitsteilnehmers über einen eigenen wie vorstehend beschriebenen Testsignalpfad mit der Sicherheitseinheit verbunden ist. Außerdem muss in diesem Fall an der Sicherheitseinheit eine entsprechende Anzahl von Ausgängen und Sicherheitseingängen vorgesehen sein.

Prinzipiell ist es bekannt, mehrere unterbrechbare Signalübertragungspfade eines Sicherheitssystems, die zu demselben mehrkanaligen Sicherheitsteilnehmer oder zu verschiedenen Sicherheitsteilnehmern gehören können, in einem gemeinsamen Testsignalpfad in Serie zu schalten, so dass eine Unterbrechung eines beliebigen der unterbrechbaren Signalübertragungspfade zu einer Unterbrechung des gemeinsamen Testsignalpfads und zu einem Ansprechen der Sicherheitsfunktion führt. Dadurch wird der notwendige Verkabelungsaufwand reduziert.

Allerdings wird dadurch die Sicherheit des Sicherheitssystems beeinträchtigt. So findet, wenn z.B. zwei gemeinsam unterbrechbare Signalübertragungspfade eines zwei- bzw. mehrkanaligen Sicherheitsteilnehmers in einem gemeinsamen Testsignalpfad in Serie geschaltet sind, zwar auch dann ein Ansprechen der Sicherheitsfunktion statt, wenn bei Auftreten eines nicht sicheren Zustands aufgrund einer Fehlfunktion abweichend von der funktionsgemäßen gemeinsamen Unterbrechbarkeit beider Signalübertragungspfade nur einer der beiden Signalübertragungspfade unterbrochen wird und somit eine Diskrepanz der Zustände der beiden redundanten Signalübertragungspfade auftritt. Jedoch bleibt diese Fehlfunktion des Sicherheitsteilnehmers, die auch als Diskrepanzfehler bezeichnet wird, unerkannt, da sich dieser Fehlerfall aus Sicht der Sicherheitseinheit nicht von einem ordnungsgemäßen Auslösefall unterscheiden lässt, so dass die durch die zwei Kanäle bezweckte Redundanz unbemerkt verloren geht. Sodann besteht die Möglichkeit, dass bei einer Fehlerhäufung, d.h. bei einer Fehlfunktion des anderen unterbrechbaren Signalübertragungspfads, die Schutzfunktion des Sicherheitsteilnehmers vollständig verloren geht.

Wenn die zwei unterbrechbaren Signalübertragungspfade desselben zwei- bzw. mehrkanaligen Sicherheitsteilnehmers in zwei voneinander getrennten parallelen Testsignalpfaden angeordnet sind, ist es für eine an die beiden Testsignalpfade angeschlossene Sicherheitseinheit prinzipiell möglich, zu erkennen, wenn eine Diskrepanz der Zustände der beiden Testsignalpfade vorliegt, d.h. der eine Testsignalpfad unterbrochen und der andere geschlossen ist, und in diesem Fall eine Sicherheitsabschaltung zu veranlassen. Wenn an einem der Testsignalpfade jedoch zum Zweck der weniger aufwendigen Verkabelung jeweils die unterbrechbaren Signalübertragungspfade mehrerer verschiedener Sicherheitsteilnehmer in Serie geschaltet sind, ist es im Fall einer solchen Fehlererkennung nicht möglich, festzustellen, welcher der in den Testsignalpfaden angeordneten Sicherheitsteilnehmern ggf. einen Diskrepanzfehler aufweist, da über die Testsignalpfade jeweils nur eine Summeninformation darüber verfügbar ist, ob überhaupt einer oder mehrere in dem Testsignalpfad angeordnete unterbrechbare Signalübertragungspfade unterbrochen worden sind.

Außerdem ist es in dem letztgenannten Fall nicht möglich, zuverlässig festzustellen, ob ein aufgetretener Fehlerzustand eines Sicherheitsteilnehmers vollständig behoben wurde und es kann zu einer fehlerhaften bzw. irrtümlichen Fehlerquittierung an der Sicherheitseinheit kommen, d.h. die Sicherheitseinheit geht irrtümlich davon aus, dass der erkannte Fehler behoben worden ist. Die Sicherheitseinheit kann nämlich dazu eingerichtet sein, nach einer wie vorstehend beschriebenen Erkennung eines Diskrepanzfehlers den Fehler zu quittieren und eine Wiedereinschaltung der Anlage zu ermöglichen, nachdem eine vollständige ordnungsgemäße Schaltsequenz der beiden Testsignalpfade erkannt wurde, d.h. ein unterbrochener Zustand beider Testsignalpfade gefolgt von einem nicht unterbrochenen Zustand beider Testsignalpfade. Eine solche Schaltsequenz kann von einem Benutzer aber dadurch erzeugt werden, dass alle der in Serie geschalteten Sicherheitsteilnehmer in den nicht sicheren und anschließend in den sicheren Zustand überführt werden. Auch wenn der fehlerhafte Signalübertragungspfad des fehlerhaften Sicherheitsteilnehmers dabei aufgrund seiner Fehlfunktion nicht geöffnet wird, wird der zugehörige Testsignalpfad dabei dennoch durch einen der anderen - im Regelfall funktionstüchtigen - Sicherheitsteilnehmer unterbrochen, so dass eine ordnungsgemäße Schaltsequenz simuliert wird. Die Fehlfunktion des fehlerhaften Sicherheitsteilnehmers wird somit durch die ordnungsgemäße Funktion des anderen Sicherheitsteilnehmers logisch kompensiert, so dass der Fehler durch die Sicherheitseinheit irrtümlich quittiert wird, woraufhin die Sicherheit eines solchen Sicherheitssystems beeinträchtigt ist. Eine solche irrtümliche Fehlerquittierung ließe sich vermeiden, indem die redundanten Signalübertragungsfade der Sicherheitsteilnehmer einzeln mit der Sicherheitseinheit oder einer weiteren mit der Sicherheitseinheit verbundenen zentralen Steuerung verbunden und von dieser auf eine Diskrepanz überwacht werden, wodurch aber wiederum ein erheblicher Aufwand für die zusätzliche Verkabelung, Auswertung und Überwachung geschaffen wird.

EP 1 363 306 A2 offenbart ein Sicherheitssystem gemäß dem Oberbegriff des Anspruchs 1.

DE 10 2011 016 137 A1 offenbart eine Sicherheitsschaltung mit einem Auswertegerät und einem Meldegerät, welches einen ersten und einen zweiten Kanal umfasst, die den Zustand eines Betätigers des Meldegeräts redundant überwachen, wobei das Auswertegerät ein erstes Pulssignal an das Meldegerät sendet und die beiden Kanäle des Meldegeräts wechselweise jeweils ein dem ersten Pulssignal nachgebildetes zweites Pulssignal zurück an das Auswertegerät senden, wenn sich der Betätiger in einem ersten Zustand befindet. Das erste und zweite Pulssignal werden zeitlich nacheinander über dasselbe Adernpaar übertragen.

Aufgabe der Erfindung ist es, ein Sicherheitssystem zu schaffen, das mit geringem Aufwand, insbesondere geringem Verkabelungsaufwand, bereitgestellt werden kann und gleichzeitig zuverlässig ein hohes Sicherheitsniveau gewährleistet.

Diese Aufgabe wird durch ein Sicherheitssystem mit den Merkmalen des Anspruchs 1 gelöst.

Das erfindungsgemäße Sicherheitssystem umfasst eine Sicherheitseinheit, welche vorzugsweise durch eine Sicherheitssteuerung gebildet ist, und wenigstens einen Sicherheitsteilnehmer, der ein Schutzgerät umfasst und zumindest einen ersten und einen zweiten unterbrechbaren Signalübertragungspfad, die bei dem Eintreten eines nicht sicheren Zustands des Schutzgeräts gemeinsam unterbrechbar sind. Das Sicherheitssystem umfasst ferner wenigstens einen Testsignalpfad, der ausgehend von einem Ausgang der Sicherheitseinheit durch den wenigstens einen Sicherheitsteilnehmer hindurch zu einem Sicherheitseingang der Sicherheitseinheit verläuft und wenigstens einen des ersten und zweiten unterbrechbaren Signalübertragungspfades umfasst. Der Sicherheitsteilnehmer umfasst außerdem einen in dem Testsignalpfad angeordneten Unterbrechungsschalter und eine Auswerteeinheit, die mit dem ersten Signalübertragungspfad und/oder mit einem die Unterbrechung des ersten Signalübertragungspfads steuernden ersten Schaltsignalausgang des Schutzgeräts verbunden ist und die mit dem zweiten Signalübertragungspfad und/oder mit einem die Unterbrechung des zweiten Signalübertragungspfads steuernden zweiten Schaltsignalausgang des Schutzgeräts verbunden ist. Die Auswerteeinheit ist dazu eingerichtet, bevorzugt kontinuierlich, zu überprüfen, ob der erste und zweite Signalübertragungspfad gemeinsam unterbrochen oder zur Unterbrechung angesteuert werden, und um den Unterbrechungsschalter zu öffnen, wenn der erste und zweite unterbrechbare Signalübertragungspfad nicht gemeinsam unterbrochen oder zur Unterbrechung angesteuert werden.

Durch die in dem Sicherheitsteilnehmer integrierte Auswerteeinheit wird somit lokal erkannt, wenn die zwei unterbrechbaren Signalübertragungspfade nicht gemeinsam unterbrochen oder zur Unterbrechung angesteuert werden. Die Auswerteeinheit unterbricht in diesem Fall den Testsignalpfad durch Öffnen des Unterbrechungsschalters. Die Unterbrechung des Testsignalpfads führt zuverlässig zu einem Ausbleiben des erwarteten Testsignals an der Sicherheitseinheit und folglich zu einem Ansprechen der Sicherheitsfunktion der Sicherheitseinheit. Somit wird sichergestellt, dass der aufgetretene Fehler sowohl erkannt als auch eine geeignete Sicherheitsmaßnahme ergriffen wird, ohne dass dafür zusätzliche Leitungen oder Signalübertragungsstrecken zwischen dem Sicherheitsteilnehmer und der Sicherheitseinheit notwendig wären. Stattdessen wird eine lokale Fehlererkennung und eine lokale Unterbrechung des ohnehin vorhandenen Testsignalpfads genutzt, um die Sicherheitsmaßnahme auszulösen.

Von der Auswerteeinheit wird lokal an dem Sicherheitsteilnehmer erkannt, wenn die beiden unterbrechbaren Signalübertragungspfade nicht mehr gemeinsam schalten, d.h. eine Diskrepanz der beiden Schutzkanäle und somit eine Fehlfunktion des Sicherheitsteilnehmers vorliegt. Eine solche Fehlfunktion kann beispielsweise durch ein Festschweißen eines der Schaltkontakte des Sicherheitsteilnehmers bedingt sein, das ein ordnungsgemäßes Öffnen des Schaltkontakts bei dem Eintreten des nicht sicheren Zustands des Schutzgeräts verhindert, oder durch eine Fehlfunktion eines Schaltsignalausgangs des Schutzgeräts, beispielsweise wenn dessen Schaltsignal dauerhaft einen sicheren Zustand des Schutzgeräts repräsentiert. Zwar wird z.B. bei einer Serienschaltung der zwei Signalübertragungspfade desselben Sicherheitsteilnehmers in dem Testsignalpfad auch bei ordnungsgemäßem Auslösen nur eines Schutzkanals, d.h. nur eines der unterbrechbaren Signalübertragungspfade, eine Unterbrechung des Testsignalpfads und damit eine Sicherheitsabschaltung bewirkt, jedoch geht die durch das Vorsehen der zwei unterbrechbaren Signalübertragungspfade bezweckte Redundanz und die damit einhergehende erhöhte Sicherheit verloren. Die Fehlererkennung durch die Auswerteeinheit verhindert jedoch, dass ein Erstfehler in Form einer solchen Fehlfunktion eines Schutzkanals unerkannt bleibt und toleriert wird und dadurch die Möglichkeit einer Fehlerhäufung dergestalt geschaffen wird, dass eine Fehlfunktion des anderen Schutzkanals zu einem vollständigen Verlust der sichernden Funktion des Sicherheitsteilnehmers führt.

Infolge der lokalen Überprüfung der gemeinsamen Unterbrechung der beiden unterbrechbaren Signalübertragungspfade bei dem Eintreten eines nicht sicheren Zustands des Schutzgeräts ist es ohne Verlust des hohen Sicherheitsniveaus möglich, mehrere unterbrechbare Signalübertragungspfade desselben oder verschiedener Sicherheitsteilnehmer in einem gemeinsamen Testsignalpfad in Serie zu schalten. Durch die lokale Fehlererkennung und Unterbrechung des Testsignalpfads wird es nämlich, wie vorstehend beschrieben, verhindert, dass ein Fehler des Sicherheitsteilnehmers vollständig unerkannt bleibt. Stattdessen ist die Auswerteeinheit in der Lage, einen Diskrepanzfehler von einem ordnungsgemäßen Auslösen der Sicherheitsfunktion durch einen Sicherheitsteilnehmer zu unterscheiden. Ferner ist durch die lokale Auswertung der unterbrechbaren Signalübertragungspfade eines Sicherheitsteilnehmers speziell eine Fehlfunktion dieses Sicherheitsteilnehmers feststellbar, so dass der fehlerhafte Sicherheitsteilnehmer identifizierbar und eine irrtümliche Fehlerquittierung aufgrund einer fehlerfreien Funktion eines anderen Sicherheitsteilnehmers ausgeschlossen ist. Dabei kann einem Benutzer ein fehlerhafter Sicherheitsteilnehmer angezeigt und der Benutzer so zum gezielten Beheben des Fehlers bzw. zum Austausch des jeweiligen fehlerhaften Sicherheitsteilnehmers aufgefordert werden.

Die Möglichkeit der Serienschaltung verringert den Verkabelungsaufwand und die Anzahl der benötigten Ein- und Ausgänge der zentralen Sicherheitseinheit und somit auch den Platzbedarf in einem die Sicherheitseinheit aufnehmenden Schaltschrank. Somit wird ein Sicherheitssystem geschaffen, das mit sehr geringem Aufwand, insbesondere geringem Verkabelungsaufwand, realisiert werden kann und gleichzeitig ein sehr hohes Sicherheitsniveau erreicht.

Vorteilhafte Ausführungsformen der Erfindung sind in den Unteransprüchen, der Beschreibung und den Figuren beschrieben.

Die Sicherheitseinheit ist vorzugsweise derart eingerichtet, dass bei einem Ausbleiben des erwarteten Testsignals an dem Sicherheitseingang eine von der Sicherheitseinheit bereitgestellte Sicherheitsfunktion anspricht. Die Sicherheitsfunktion führt vorzugsweise dazu oder besteht darin, dass eine von dem Sicherheitssystem überwachte sicherheitskritische Anlage in einen sicheren Zustand überführt wird, beispielsweise indem die Anlage abgeschaltet und insbesondere deren Stromzufuhr unterbrochen wird. Ebenso kann die Sicherheitseinheit überwachen, ob das erwartete Testsignal eingeht und ein von dem Ergebnis der Überwachung abhängiges Überwachungssignal erzeugen.

Die Sicherheitseinheit kann prinzipiell eine Sicherheitskomponente wie z.B. ein Sicherheitsrelais, einen Sicherheitssensor, einen Sicherheitsaktor oder einen Antrieb umfassen bzw. dadurch gebildet sein, wobei beispielsweise ein Sicherheitsrelais von dem eingehenden Testsignal, insbesondere direkt, angesteuert sein kann und derart in der Stromzufuhr der Anlage angeordnet sein kann, dass ein Öffnen des Relais eine Unterbrechung der Stromzufuhr zu der Anlage bewirkt. Die Sicherheitseinheit kann integraler Bestandteil einer Kaskade von Sicherheitsteilnehmern, beispielsweise einer Lichtgitterkaskade mit mehreren Lichtgittern, eines Laserscannerverbunds mit mehreren Laserscannern oder einer Relaiskaskade mit mehreren Relais sein. Die Sicherheitseinheit kann auch durch einen Sicherheitsantrieb mit einem direkten Not-Aus-Anschluss oder eine sichere Ventilinsel mit einem direkten Not-Aus-Anschluss gebildet sein, wobei der Not-Aus-Anschluss bevorzugt den Ausgang und Sicherheitseingang der Sicherheitseinheit bildet. Der Not-Aus-Anschluss kann z.B. mit einem wie vorstehend beschriebenen Sicherheitsrelais verbunden sein.

Vorzugsweise ist die Sicherheitseinheit durch eine Sicherheitssteuerung gebildet, welche z.B. dazu eingerichtet ist, bei Ausbleiben des erwarteten Testsignals die überwachte Anlage oder eine damit verbundene Einrichtung aktiv anzusteuern, um die Anlage in einen sicheren Zustand zu überführen. Zum Beispiel kann die Sicherheitssteuerung eine Unterbrechung der Stromzufuhr zu der Anlage bewirken, insbesondere durch Ansteuerung eines in einer Stromzufuhrleitung angeordneten Relais oder anderen Unterbrechungselements. Die Sicherheitseinheit bzw. Sicherheitssteuerung kann eine digitale Logikeinheit umfassen, welche einen oder mehrere Mikroprozessoren umfassen kann. Die Logikeinheit steuert vorzugsweise das Aussenden des Ausgangssignals und/oder die Auswertung des eingehenden Testsignals. Die Sicherheitseinheit bzw. Sicherheitssteuerung kann durch eine speicherprogrammierbare Steuerung gebildet sein.

Der wenigstens eine Sicherheitsteilnehmer umfasst vorzugsweise wenigstens ein sicheres Schutzgerät, welches dazu ausgebildet ist, abhängig von einer für die Sicherheit z.B. einer Person relevanten äußeren Einwirkung einen sicheren Zustand oder einen nicht sicheren Zustand anzunehmen. Beispielsweise kann es sich um einen Not-Aus-Taster handeln, der einen oder mehrere z.B. mechanische Schaltkontakte umfasst, die im sicheren, d.h. nicht betätigten, Zustand des Not-Aus-Tasters geschlossen sind und die im nicht sicheren, d.h. betätigten, Zustand des Not-Aus-Tasters geöffnet sind. Ein weiteres Beispiel ist eine Zuhaltung einer Sicherheitstür, die einen oder mehrere insbesondere magnetisch angesteuerte Schaltkontakte aufweist, die in der sicheren, d.h. geschlossenen, Stellung der Tür geschlossen sind und die in der nicht sicheren, d.h. geöffneten, Stellung der Tür geöffnet sind.

Ein Sicherheitsteilnehmer weist vorzugsweise zumindest zwei äquivalent schaltende unterbrechbare Signalübertragungspfade auf, d.h. der Sicherheitsteilnehmer ist dazu ausgebildet, abhängig von dem sicheren oder nicht sicheren Zustand des Schutzgeräts entweder beide unterbrechbaren Signalübertragungspfade zu schließen oder beide unterbrechbaren Signalübertragungspfade zu öffnen, und zwar bevorzugt im Wesentlichen gleichzeitig. Das System kann prinzipiell auch zumindest einen Sicherheitsteilnehmer oder ein Schutzgerät mit zwei antivalent schaltenden unterbrechbaren Signalübertragungspfaden umfassen, d.h. einen Sicherheitseilnehmer bzw. ein Schutzgerät, bei dem im sicheren Zustand ein Signalübertragungspfad geschlossen und ein anderer Signalübertragungspfad geöffnet ist, während im nicht sicheren Zustand der eine Signalübertragungspfad geöffnet und der andere Signalübertragungspfad geschlossen ist. Vorzugsweise wird dann der Schaltzustand zumindest eines Signalübertragungspfads durch eine wie nachstehend erläuterte Umwandlung bzw. Abbildung auf den entgegen gesetzten Schaltzustand eines weiteren unterbrechbaren Signalübertragungspfads abgebildet, so dass in dem Sicherheitsteilnehmer wiederum zumindest zwei äquivalent schaltende Signalübertragungspfade vorhanden sind, die bei Eintreten eines nicht sicheren Zustands gemeinsam unterbrechbar sind.

Der erste und/oder der zweite unterbrechbare Signalübertragungspfad des Sicherheitsteilnehmers können jeweils Teil des Schutzgeräts sein, d.h. durch einen ersten und/oder zweiten unterbrechbaren Signalübertragungspfad des Schutzgeräts gebildet sein, die jeweils abhängig von dem sicheren oder nicht sicheren Zustand des Schutzgeräts unmittelbar den geschlossenen oder geöffneten Zustand annehmen.

Prinzipiell ist es aber auch möglich, dass der sichere oder nicht sichere Zustand des Schutzgeräts über eine beispielsweise elektrische oder elektronische Umwandlung auf einen geschlossenen bzw. geöffneten Zustand des ersten bzw. des zweiten unterbrechbaren Signalübertragungspfads abgebildet bzw. umgewandelt wird. Das Schutzgerät kann dabei beispielsweise einen ersten und/oder zweiten Schaltsignalausgang aufweisen, der ein Schaltsignal ausgibt, das den sicheren oder nicht sicheren Zustand des Schutzgeräts repräsentiert, wobei der zugeordnete erste und/oder zweite unterbrechbare Signalübertragungspfad abhängig von diesem Schaltsignal angesteuert und im sicheren Zustand geschlossen bzw. im nicht sicheren Zustand geöffnet wird. In diesem Fall kann der erste und/oder zweite Signalübertragungspfad auch außerhalb des Schutzgeräts angeordnet und in entsprechender Weise mit dem Schutzgerät gekoppelt sein. Beispielsweise können der erste und zweite Signalübertragungspfad in einem im Nachfolgenden noch genauer erläuterten Anschaltungsmodul des Sicherheitsteilnehmers angeordnet sein, welches mit dem Schutzgerät über eine Anschaltungsleitung verbunden ist.

Die Auswerteeinheit kann auch dazu dienen, einen Leitungsfehler wie insbesondere einen Kurzschluss oder Querschluss zu erkennen, der in einer oder mehreren Verbindungsleitungen auftreten kann, welche die verschiedenen Schutzkanäle des Schutzgeräts mit einem nachstehend genauer erläuterten Anschaltungsmodul verbinden, in welchem vorzugsweise die Auswerteeinheit aufgenommen ist. Eine Verbindungsleitung kann z.B. einen Hinleiter und einen Rückleiter umfassen, zwischen denen ein jeweiliger unterbrechbarer Signalübertragungspfad des Schutzgeräts in Serie geschaltet ist, oder eine Schaltsignalleitung, die einen Schaltsignalausgang des Schutzgeräts mit dem Anschaltungsmodul verbindet.

Um den Schaltzustand der unterbrechbaren Signalübertragungspfade zu überprüfen, kann die Auswerteeinheit z.B. jeweils mit einem Hinleiter und mit einem Rückleiter verbunden sein, zwischen denen der jeweilige unterbrechbare Signalübertragungspfad in Serie geschaltet ist. Der Hinleiter und der Rückleiter können dabei Teil einer Anschaltungsleitung sein und dazu dienen, die unterbrechbaren Signalübertragungspfade, die in diesem Fall Teil des Schutzgeräts sind, mit dem Anschaltungsmodul zu verbinden, in dem die Auswerteeinheit angeordnet ist. In diesem Fall kann die Auswerteeinheit auch einen Leitungsfehler erkennen wie insbesondere einen Kurzschluss oder einen Querschluss zwischen den Hinleitern und Rückleitern. Beispielsweise kann ein Kurzschluss zwischen dem Hinleiter und dem Rückleiter desselben unterbrechbaren Signalübertragungspfads oder auch ein Querschluss zwischen dem Hinleiter oder Rückleiter eines unterbrechbaren Signalübertragungspfads und dem Hinleiter oder Rückleiter des anderen Signalübertragungspfads aus der Sicht der Auswerteeinheit jeweils wie ein dauerhaft geschlossener erster bzw. zweiter Signalübertragungspfad erscheinen und deshalb z.B. ähnlich wie ein festgeschweißter Schaltkontakt zu einem Diskrepanzfehler führen, so dass die Auswerteeinheit auch einen solchen Fehler erkennen kann.

Die Erkennung von Leitungsfehlern durch die Auswerteeinheit kann die gefahrlose Führung von mehreren Verbindungsleitungen bzw. Hin- und Rückleitern eines mehrkanaligen Schutzgeräts in einem gemeinsamen Anschaltungskabel ermöglichen.

Die Sicherheitseinheit ist vorzugsweise dazu ausgebildet, ein vorzugsweise dynamisches Ausgangssignal bzw. Testsignal zu erzeugen und an den Testsignalpfad auszusenden und/oder dazu, ein vorzugsweise dynamisches Testsignal von dem Testsignalpfad zu empfangen und zu überprüfen, ob das empfangene Testsignal einem erwarteten Testsignal entspricht. Das ausgesendete Ausgangssignal und/oder das empfangene Testsignal kann dabei beispielsweise einen hohen Pegel mit einer regelmäßig, insbesondere periodisch, wiederkehrenden, den hohen Pegel unterbrechenden Testlücke aufweisen.

Zusätzlich zu dem ersten und zweiten unterbrechbaren Signalübertragungspfad kann der Sicherheitsteilnehmer noch einen oder mehrere weitere unterbrechbare Signalübertragungspfade aufweisen, die bei dem Eintreten eines nicht sicheren Zustands des Schutzgeräts gemeinsam mit dem ersten und zweiten unterbrechbaren Signalübertragungspfad unterbrechbar sein können. Die Auswerteeinheit überprüft dann vorzugsweise, ob alle gemeinsam unterbrechbaren Signalübertragungspfade des Sicherheitsteilnehmers gemeinsam unterbrochen oder zur Unterbrechung angesteuert werden, und öffnet andernfalls den Unterbrechungsschalter.

Erfindungsgemäß sind die zwei unterbrechbaren Signalübertragungspfade des Sicherheitsteilnehmers in dem Testsignalpfad elektrisch in Serie geschaltet. Durch die Verwendung eines gemeinsamen Testsignalpfads wird eine einkanalige Auswertung beider Schutzkanäle ermöglicht und der für die Verkabelung erforderliche Aufwand erheblich reduziert, wobei gleichzeitig die Unterbrechung zumindest eines der unterbrechbaren Signalübertragungspfade zu einer Unterbrechung des Testsignalpfads und somit zum Ansprechen der Sicherheitsfunktion führt, so dass die redundante Schutzfunktion der beiden Kanäle des Sicherheitsteilnehmers ausgenutzt wird. Durch die Auswerteeinheit und den Unterbrechungsschalter wird dabei gewährleistet, dass ein Diskrepanzfehler, d.h. ein nicht gemeinsames Unterbrechen bzw. entsprechendes Ansteuern der beiden Signalübertragungspfade, nicht unerkannt bleibt, sondern zuverlässig sowohl zum Ansprechen der Sicherheitsfunktion als auch zu einer Fehlererkennung führt.

Gemäß einer weiteren vorteilhaften Ausführungsform ist wenigstens einer der unterbrechbaren Signalübertragungspfade eines Sicherheitsteilnehmers mit einem weiteren in dem Testsignalpfad angeordneten unterbrechbaren Signalübertragungspfad eines anderen Sicherheitsteilnehmers des Sicherheitssystems elektrisch in Serie geschaltet. Auf diese Weise können mehrere Sicherheitsteilnehmer unter Verwendung eines gemeinsamen Testsignalpfads an die Sicherheitseinheit angeschlossen werden. Es wird somit auf einfache Weise und mit geringem Aufwand eine Kaskade von Sicherheitsteilnehmern realisiert, wobei eine Unterbrechung zumindest eines unterbrechbaren Signalübertragungspfads eines beliebigen Sicherheitsteilnehmers der Kaskade zur Unterbrechung des Testsignalpfads und somit zum Ansprechen der Sicherheitsfunktion führt. Durch die lokale Überprüfung auf Diskrepanzfehler wird dabei nach einer Fehlfunktion eines Sicherheitsteilnehmers eine aufgrund einer fehlerfreien Funktion des anderen Sicherheitsteilnehmers irrtümlich durchgeführte Fehlerquittierung ausgeschlossen.

Gemäß einer Ausführungsform umfasst die Sicherheitseinheit zwei jeweils zwischen einem Ausgang und einem Sicherheitseingang der Sicherheitseinheit angeordnete Testsignalpfade, an die jeweils mehrere, zwei unterbrechbare Signalübertragungspfade aufweisende Sicherheitsteilnehmer angeschlossen sind, wobei der erste Signalübertragungspfad eines Sicherheitsteilnehmer in dem einen und der zweite Signalübertragungspfad eines Sicherheitsteilnehmers in dem anderen Testsignalpfad angeordnet ist. Ein Sicherheitsteilnehmer kann dann einen in dem ersten und einen in dem zweiten Testsignalpfad angeordneten, zur Unterbrechung des jeweiligen Testsignalpfads ausgebildeten Unterbrechungsschalter aufweisen und dazu ausgebildet sein, bei dem Erkennen eines Diskrepanzfehlers des Sicherheitsteilnehmers wenigstens einen und vorzugsweise beide Unterbrechungsschalter zu öffnen.

Vorzugsweise sind die Sicherheitseinheit und der Sicherheitsteilnehmer über wenigstens ein Kabel verbunden, in dem ein Leiter bzw. eine Ader angeordnet ist, der bzw. die einen Abschnitt des Testsignalpfads bildet. Bevorzugt ist der wenigstens eine Sicherheitsteilnehmer mit weiteren Sicherheitsteilnehmern ebenfalls über ein oder mehrere Kabel verbunden, in denen ebenfalls jeweils ein Leiter bzw. eine Ader angeordnet ist, der bzw. die einen Abschnitt des Testsignalpfads bildet. Die Kabel können beispielsweise Buskabel eines Bussystems bilden. Die Sicherheitsteilnehmer können dabei örtlich über die sicherheitskritische Anlage verteilt und über die Kabel miteinander verbunden sein.

Erfindungsgemäß sind der erste und zweite unterbrechbare Signalübertragungspfad des Sicherheitsteilnehmers bei dem Eintreten eines nicht sicheren Zustands des Schutzgeräts gemeinsam unterbrechbar. Das bedeutet, dass die beiden unterbrechbaren Signalübertragungspfade bei fehlerfreier Funktion den sicheren und nicht sicheren Zustand des Schutzgeräts übereinstimmend und gemeinsam anzeigen, d.h. ein Wechsel des Schutzgeräts zwischen dem sicheren und dem nicht sicheren Zustand führt zu einem gemeinsamen, d.h. vorzugsweise im Wesentlichen gleichzeitigen bzw. synchronen Unterbrechen oder Schließen beider unterbrechbarer Signalübertragungspfade.

Bevorzugt ist die Auswerteeinheit dazu ausgebildet, zu überprüfen, ob die zwei Signalübertragungspfade bis auf eine vorgegebene Diskrepanzzeit gleichzeitig unterbrochen oder zur Unterbrechung angesteuert werden. Ebenso kann die Auswerteeinheit dazu ausgebildet sein, zu überprüfen, ob die zwei Signalübertragungspfade bis auf eine vorgegebene Diskrepanzzeit gleichzeitig geschlossen oder zum Schließen angesteuert werden, beispielsweise bei einem Einschalten oder Wiedereinschalten des Sicherheitssystems. Eine solche Einschaltüberwachung kann getrennt von der Überwachung des gemeinsamen Unterbrechens der Signalübertragungspfade realisiert sein. Wird festgestellt, dass die beiden Signalübertragungspfade nicht gleichzeitig unterbrochen oder geschlossen bzw. entsprechend angesteuert werden, d.h. tritt ein Diskrepanzzeitfehler auf, kann die Auswerteeinheit z.B. den Unterbrechungsschalter öffnen und somit aktiv eine Unterbrechung des Testsignalpfads bewirken. Die Auswerteeinheit kann auch ausgestaltet sein, um eine entsprechende Information auf andere Weise zum Auslösen einer Sicherheitsfunktion auszuwerten und/oder um zum Beispiel eine Fehlfunktion anzuzeigen. Um die Gleichzeitigkeit des Unterbrechens oder Ansteuerns zum Unterbrechen bzw. die Gleichzeitigkeit des Schließens oder Ansteuerns zum Schließen zu überwachen, kann die Auswerteeinheit beispielsweise einen entsprechend eingerichteten Mikroprozessor und/oder eine eigene Zeitbasis wie z.B. einen Taktgeber des Mikroprozessors umfassen.

Die Auswerteeinheit einschließlich eines ggf. vorgesehenen Mikroprozessors ist vorzugsweise in einem Gehäuse des Sicherheitsteilnehmers angeordnet, beispielsweise einem Gehäuse nach der Gehäuseschutzart IP 67 oder IP 20.

Prinzipiell sind im Rahmen der Erfindung unterschiedliche wie nachstehend beschriebene Typen von unterbrechbaren Signalübertragungspfaden einsetzbar, wobei der erste und zweite unterbrechbare Signalübertragungspfad des Sicherheitsteilnehmers von demselben Typ oder auch von unterschiedlichen Typen sein können.

Ein unterbrechbarer Signalübertragungspfad kann beispielsweise als elektrischer Schaltpfad ausgebildet sein und einen elektrischen oder elektronischen Schalter umfassen, welcher sich im sicheren Zustand des Schutzgeräts in seinem geschlossenen, elektrisch leitenden Zustand befindet und welcher sich in dem nicht sicheren Zustand des Schutzgeräts in seinem geöffneten, elektrisch nicht leitenden Zustand befindet. In diesem Fall ist die Auswerteeinheit vorzugsweise mit einem an einem Ende des Schalters angeordneten Hinleiter und einem an dem anderen Ende des Schalters angeordneten Rückleiter jeweils über einen Signalpfad verbunden, um den Schaltzustand des Schalters im Rahmen der Überprüfung des gemeinsamen Unterbrechens beider Signalübertragungspfade überwachen zu können. Ein elektrischer Schalter umfasst vorzugsweise einen mechanischen elektrischen Schaltkontakt, welcher beispielsweise mechanisch betätigbar sein kann, beispielsweise ein mechanisch betätigbarer Schaltkontakt eines als Not-Aus-Taster ausgebildeten Schutzgeräts, oder welcher elektrisch betätigbar sein kann, wie z.B. der Schaltkontakt eines Sicherheitsrelais. Der Schaltkontakt kann auch magnetisch betätigbar sein, wie z.B. der Schaltkontakt eines Reed-Schalters, welcher beispielsweise bei einem als Türzuhaltung ausgebildeten Schutzgerät eingesetzt werden kann und welcher durch Schließen und Öffnen der Tür schließbar und unterbrechbar ist.

Ein elektronischer Schalter umfasst vorzugsweise einen elektronisch ansteuerbaren Schalter wie z.B. einen Transistor, insbesondere einen Bipolartransistor oder einen Feldeffekttransistor. Ein solcher elektronischer Schalter kann mit einem Schaltsignalausgang des Schutzgeräts verbunden sein, welcher ein den sicheren oder nicht sicheren Zustand des Schutzgeräts repräsentierendes Schaltsignal aussendet oder bereitstellt, wobei der elektronische Schalter abhängig von dem Schaltsignal elektronisch angesteuert und entsprechend dem sicheren oder nicht sicheren Zustand des Schutzgeräts geschlossen oder geöffnet wird. Der durch das Schaltsignal repräsentierte Zustand, "sicher" oder "nicht sicher", wird somit elektronisch umgewandelt und auf einen geschlossenen oder geöffneten Zustand des durch den Schalter gebildeten unterbrechbaren Signalübertragungspfads abgebildet. Bei dieser Ausgestaltung kann die Auswerteeinheit einerseits direkt mit dem Hin- und Rückleiter des Schalters über entsprechende Signalpfade verbunden sein, um im Rahmen der Diskrepanzüberprüfung festzustellen, ob der Schalter geöffnet oder geschlossen ist. Ebenso kann die Auswerteeinheit über einen entsprechenden Signalpfad mit dem Schaltsignalausgang verbunden sein, um im Rahmen der Diskrepanzprüfung festzustellen, ob der Schalter zum Öffnen oder Schließen angesteuert wird. Das Schutzgerät kann beispielsweise als optisches Schutzgerät wie z.B. als Lichtschranke, Lichtgitter oder Laserscanner ausgebildet sein. Der Schaltsignalausgang kann als aktiver und/oder als digitaler Schaltsignalausgang ausgebildet sein und ist vorzugsweise als halbleiterbasierter Schaltsignalausgang wie z.B. als OSSD-(output signal switching device)-Schaltsignalausgang und/oder als pnphalbleiterbasierter Schaltsignalausgang ausgebildet.

Eine wie vorstehend beschriebene Abbildung des Schaltzustands über ein Schaltsignal kann auch dazu genutzt werden, einen geschlossenen Zustand eines Schalters des Schutzgeräts in einen geöffneten Zustand des ersten bzw. zweiten unterbrechbaren Signalübertragungspfads abzubilden und umgekehrt, so dass auch Schutzgeräte mit einem oder mehreren Schaltern verwendet werden können, die im sicheren Zustand des Schutzgeräts geöffnet und im nicht sicheren Zustand geschlossen sind. Dazu kann der Schaltzustand des jeweiligen Schalters auf den jeweils anderen Schaltzustand des ersten bzw. zweiten unterbrechbaren Signalübertragungspfads abgebildet werden. Der Schalter des Schutzgeräts bzw. dessen Hinleiter und Rückleiter stellen dann einen, insbesondere passiven, Schaltsignalausgang des Schutzgeräts dar, wobei ein an diesem Schaltsignalausgang vorhandenes Schaltsignal zur Ansteuerung des ersten bzw. zweiten unterbrechbaren Signalübertragungspfads genutzt wird und von der Auswerteeinheit, wie vorstehend beschrieben, überwacht werden kann.

Gemäß einer Ausführungsform weist der Sicherheitsteilnehmer zwei elektrische Schaltkontakte als ersten und zweiten Signalübertragungspfad auf. Die Schaltkontakte können zum gemeinsamen Wechseln ihres Schaltzustands mechanisch zwangsgeführt sein, es können aber insbesondere auch Sicherheitsteilnehmer mit zwei nicht mechanisch zwangsgeführten elektrischen Schaltkontakten eingesetzt werden, beispielsweise Sicherheitsteilnehmer mit zwei Reed-Schalter-Kontakten.

Bei dem ersten und/oder zweiten unterbrechbaren Signalübertragungspfad kann es sich ferner um einen optischen Signalübertragungspfad handeln, beispielsweise einen von dem Sender und dem Empfänger einer Lichtschranke definierten Lichtpfad, welcher z.B. durch einen zu schützenden Raumbereich verläuft und durch ein in den Raumbereich eintretendes Objekt unterbrechbar ist.

Vorzugsweise realisiert die Auswerteeinheit eine Wiederanlaufsperre für die sicherheitskritische Anlage nach einem von der Auswerteeinheit erkannten Diskrepanzfehler. Dabei kann die Auswerteeinheit dazu eingerichtet sein, den Unterbrechungsschalter, wenn die zwei Signalübertragungspfade nicht gemeinsam unterbrochen oder zur Unterbrechung angesteuert wurden, zu öffnen und erst wieder zu schließen, wenn eine Behebung des erkannten Fehlers bzw. eine entsprechende Fehlerquittierung erfolgt ist. Dabei schließt die Auswerteeinheit den Unterbrechungsschalter nicht bereits dann wieder, wenn das Schutzgerät seinen sicheren Zustand annimmt und die zwei Signalübertragungspfade wieder beide geschlossen sind oder zum Schließen angesteuert werden. Dadurch würde nämlich der Fehler, dass einer der beiden unterbrechbaren Signalübertragungspfade dauerhaft geschlossen ist oder zum Schließen angesteuert wird, nicht behoben. Stattdessen ist in diesem Fall zumindest in aller Regel ein Austausch des Sicherheitsteilnehmers bzw. insbesondere des Schutzgeräts erforderlich, bevor die Wiederinbetriebnahme des Sicherheitssystems und der Anlage durch Schließen des Unterbrechungsschalters ermöglicht werden darf.

Der Sicherheitsteilnehmer kann es einem Benutzer ermöglichen, nach dem Austauschen des defekten Schutzgeräts den Fehler an dem Sicherheitsteilnehmer, beispielsweise über ein an dem Sicherheitsteilnehmer vorhandenes Eingabeelement, lokal zu quittieren. Der Unterbrechungsschalter kann dann so lange geöffnet gehalten werden, bis eine solche lokale Fehlerquittierung durch den Benutzer erfolgt.

Die Auswerteeinheit kann auch dazu eingerichtet sein, zur Erkennung einer Behebung des Fehlers wie z.B. einem Austauschen des Schutzgeräts zu überprüfen, ob auf eine wie vorstehend beschriebene Fehlererkennung und Öffnung des Unterbrechungsschalters eine vollständige ordnungsgemäße Schältsequenz folgt, und in diesem Fall den Fehler zu quittieren. Eine solche Schaltsequenz besteht darin, dass der erste und zweite unterbrechbare Signalübertragungspfad des Sicherheitsteilnehmers beide gemeinsam geöffnet bzw. zum Öffnen angesteuert werden und anschließend gemeinsam geschlossen bzw. zum Schließen angesteuert werden. Nach einer solchen Erkennung kann die Auswerteeinheit dann den Unterbrechungsschalter wieder schließen, so dass eine Wiederinbetriebnahme des Sicherheitssystems und der damit verbundenen Anlage ermöglicht wird.

Eine Überprüfung kann insbesondere umfassen, dass überprüft wird, ob das Öffnen bzw. Ansteuern zum Öffnen der Signalübertragungspfade zumindest im Rahmen einer vorgegebenen Diskrepanzzeit gleichzeitig erfolgt, und/oder dass überprüft wird, ob das Schließen bzw. Ansteuern zum Schließen der Signalübertragungspfade zumindest im Rahmen einer vorgegebenen Diskrepanzzeit gleichzeitig erfolgt.

Der Sicherheitsteilnehmer kann eine Benachrichtigungseinheit umfassen, die dazu ausgebildet ist, in Abhängigkeit von der durch die Auswerteeinheit durchgeführten Überprüfung, ob die zwei Signalübertragungspfade gemeinsam unterbrochen oder zur Unterbrechung angesteuert werden, eine für einen Benutzer wahrnehmbare Benachrichtigung wie z.B. eine visuelle Anzeige zu erzeugen, beispielsweise um dem Benutzer einen erkannten Fehler anzuzeigen. Alternativ oder zusätzlich kann der Sicherheitsteilnehmer dazu ausgebildet sein, um im Falle eines solchen Fehlers eine entsprechende, den Fehler anzeigende Nachricht an die Sicherheitseinheit mittels einer Datenkommunikation zu übermitteln.

Ein wie hierin beschriebener Sicherheitsteilnehmer kann prinzipiell vollständig durch ein Schutzgerät gebildet sein, welches die hierin beschriebenen Funktionen bereitstellt. Vorzugsweise umfasst wenigstens einer der Sicherheitsteilnehmer jedoch zusätzlich zu dem Schutzgerät ein Anschaltungsmodul, über das der Sicherheitsteilnehmer in das Sicherheitssystem eingebunden ist. Das Anschaltungsmodul und das Schutzgerät können in separaten Gehäusen angeordnet sein und/oder über eine Anschaltungsleitung, die mindestens ein Anschaltungskabel umfassen kann, miteinander verbunden sein. Ein solches separates Anschaltungsmodul kann direkt mit der Testsignalleitung bzw. Busleitung verbunden sein, um den Sicherheitsteilnehmer in den Testsignalpfad einzubinden. Ein solches Anschaltungsmodul ermöglicht es, bereits vorhandene Schutzgeräte in einfacher Weise in das erfindungsgemäße Sicherheitssystem einzubinden und dabei die hierin beschriebenen Funktionen zu realisieren. Vorzugsweise umfasst das Anschaltungsmodul die Auswerteeinheit.

Wie vorstehend beschrieben, kann das Schutzgerät prinzipiell selbst den ersten und/oder zweiten bei dem Auftreten des nicht sicheren Zustands des Schutzgeräts unterbrechbaren Signalübertragungspfad aufweisen, beispielsweise einen Schalter, einen elektrischen Schaltkontakt oder eine unterbrechbare Lichtschranke. Wenn das Schutzgerät selbst den ersten und/oder zweiten unterbrechbaren Signalübertragungspfad aufweist, kann das Anschaltungsmodul den ersten und/oder zweiten unterbrechbaren Signalübertragungspfad dadurch in das Sicherheitssystem einbinden, dass es den ersten und/oder zweiten unterbrechbaren Signalübertragungspfad, bevorzugt über ein Anschaltungskabel zwischen dem Schutzgerät und dem Anschaltungsmodul, so mit dem Testsignalpfad verbindet, dass der unterbrechbare Signalübertragungspfad unmittelbarer Bestandteil des Testsignalpfads ist und das Testsignal den unterbrechbaren Signalübertragungspfad als unmittelbaren Übertragungsweg nutzt.

Gemäß einer vorteilhaften Ausführungsform umfasst der erste und/oder zweite unterbrechbare Signalübertragungspfad des Sicherheitsteilnehmers einen in dem Schutzgerät angeordneten Schalter, der über einen Hinleiter und einen Rückleiter in den Testsignalpfad eingebunden ist, wobei der Hinleiter und der Rückleiter in einer das Schutzgerät und das Anschaltungsmodul verbindenden Anschaltungsleitung angeordnet sind.

Ebenso kann das Schutzgerät einen ersten und/oder zweiten, insbesondere digitalen, Schaltsignalausgang wie z.B. einen OSSD-Ausgang aufweisen, an dem ein den sicheren und nicht sicheren Zustand des Schutzgeräts repräsentierendes Schaltsignal ausgegeben wird bzw. vorhanden ist.

Wenn das Schutzgerät einen ersten und/oder zweiten, den sicheren oder nicht sicheren Zustand des Schutzgeräts repräsentierenden Schaltsignalausgang umfasst, ist der erste und/oder zweite unterbrechbare Signalübertragungspfad vorzugsweise in dem Anschaltungsmodul angeordnet und beispielsweise durch einen elektronischen Schalter gebildet. Dieser ist dann über eine bevorzugt in dem Anschaltungskabel angeordnete Schaltsignalleitung mit dem Schaltsignalausgang des Schutzgeräts verbunden und wird abhängig von dem an dem Schaltsignalausgang vorhandenen Schaltsignal angesteuert, um dem sicheren bzw. nicht sicheren Zustand des Schutzgeräts entsprechend den geschlossenen bzw. geöffneten Zustand anzunehmen.

Gemäß einer vorteilhaften Ausführungsform, die im Zusammenhang mit der Figurenbeschreibung eingehend erläutert ist, umfasst das Anschaltungsmodul einen Testsignaleingang für ein eingehendes Testsignal und einen Testsignalausgang für ein ausgehendes Testsignal. Das mit dem Anschaltungsmodul über eine Anschaltungsleitung verbundene Schutzgerät umfasst einen ersten und zweiten Schalter, die jeweils über einen Hinleiter und einen Rückleiter der Anschaltungsleitung des Sicherheitsteilnehmers mit dem Anschaltungsmodul verbunden sind. Jeder Schalter bildet dabei gemeinsam mit dem zugeordneten Hinleiter und Rückleiter einen elektrischen Schaltpfad, welcher einen der unterbrechbaren Signalübertragungspfade des Sicherheitsteilnehmers bildet, wobei die elektrischen Schaltpfade in einem gemeinsamen Testsignalpfad über eine nachstehend erläuterte Testschaltung in Serie geschaltet sind.

Das Anschaltungsmodul umfasst eine Testschaltung für die beiden Schaltpfade, welche eine gesteuerte Stromquelle, eine gesteuerte Stromsenke und ein Stromrichtungselement umfasst. Die Testschaltung für die beiden Schaltpfade dient dazu, sowohl im Falle eines geöffneten Zustands zumindest eines der beiden Schalter als auch bei einem Querschluss zwischen den beiden Schaltpfaden in der zwischen dem Anschaltungsmodul und dem Schutzgerät angeordneten Anschaltungsleitung das über den Testsignalpfad übertragene Signal zu unterbrechen bzw. an dem Testsignalausgang ein Testsignal auszugeben, das zuverlässig zu einer Verletzung der Erwartungshaltung der Sicherheitseinheit führt.

Dazu ist der Testsignaleingang des Anschaltungsmoduls mit einem Steuereingang der gesteuerten Stromquelle oder der gesteuerten Stromsenke verbunden, so dass die gesteuerte Stromquelle oder Stromsenke durch das eingehende Testsignal oder ein davon abgeleitetes Signal ansteuerbar ist, wobei ein gesteuerter Ausgang derselben von Stromquelle und Stromsenke mit dem Hinleiter des ersten Schaltpfades verbunden ist, um einen Strom über den ersten Schaltpfad zu übertragen. Der Rückleiter des ersten Schaltpfades ist mit dem Steuereingang der jeweils anderen der gesteuerten Stromquelle und der gesteuerten Stromsenke verbunden, so dass die gesteuerte Stromquelle oder Stromsenke durch das über den ersten Schaltpfad übertragene Stromsignal oder ein davon abgeleitetes Signal ansteuerbar ist. Der gesteuerte Ausgang der anderen der gesteuertem Stromquelle und Stromsenke ist mit dem Hinleiter des zweiten Schaltpfads verbunden, um einen Strom über den zweiten Schaltpfad zu übertragen. Dabei ist der Rückleiter des zweiten Schaltpfades mit einem Stromrichtungselement verbunden, welches dazu ausgebildet ist, ein von dem über den zweiten Schaltpfad übertragenen Strom, insbesondere von dessen Richtung, abhängiges Signal zu liefern. Der Testsignalausgang des Anschaltungsmoduls ist mit dem Stromrichtungselement verbunden, um das von dem Stromrichtungselement erzeugte Signal oder ein davon abgeleitetes Signal als ausgehendes Testsignal des Sicherheitsteilnehmers auszugeben.

Das Schutzgerät kann zusätzlich zu dem ersten und zweiten Schalter auch noch einen oder mehrere weitere Schalter umfassen, die, beispielsweise über die Testschaltung, in den Testsignalpfad seriell zur Bildung eines elektrischen Schaltpfades eingeschaltet sein können, so dass sie den Testsignalpfad abhängig von ihrem Schaltzustand schließen oder unterbrechen.

Die durch die vorstehend beschriebene Testschaltung bezweckte Erkennung eines Querschlusses zwischen den beiden Schaltpfaden beruht darauf, dass im fehlerfreien Betrieb und im sicheren Zustand des Schutzgeräts der Strom durch die zwei Schaltpfade in unterschiedlichen Richtungen getrieben wird, da der Strom durch einen der elektrischen Schaltpfade von einer Stromquelle getrieben wird, die einen ausgehenden elektrischen Stromfluss erzeugt, und der Strom durch den anderen elektrischen Schaltpfad von einer Stromsenke getrieben wird, die einen eingehenden elektrischen Stromfluss erzeugt. Ein Querschluss zwischen beiden Schaltpfaden führt deshalb zu einer Richtungsumkehr des Stromflusses in dem mit dem Stromrichtungselement verbundenen elektrischen Schaltpfad oder zumindest zu einer Verringerung des Stromflusses in der erwarteten Richtung im Vergleich zu dem bei fehlerfreiem Betrieb, d.h. in Abwesenheit eines Querschlusses zwischen beiden Schaltpfaden, fließenden Strom. Das Stromrichtungselement kann das Vorliegen einer solchen Abweichung des Stromflusses von dem Stromfluss bei fehlerfreiem Betrieb erkennen und dafür sorgen, dass ein Testsignal an dem Testsignalausgang des Sicherheitsteilnehmers ausgeben bzw. angelegt wird, welches von dem bei fehlerfreien Betrieb übertragenen Testsignal abweicht und die Erwartungshaltung der Sicherheitseinheit verletzt und somit zu einem Ansprechen der Sicherheitsfunktion führt.

Gemäß einer weiteren vorteilhaften Ausführungsform, die im Zusammenhang mit der Figurenbeschreibung eingehend erläutert ist, weist das Sicherheitssystem eine Busleitung auf, die an dem Ausgang und dem Sicherheitseingang der Sicherheitseinheit angeschlossen ist, wobei mehrere Sicherheitsteilnehmer, die jeweils ein Schutzgerät umfassen, an die Busleitung angeschlossen sind. Zumindest einer und bevorzugt jeder Sicherheitsteilnehmer ist dabei als ein wie vorstehend beschriebener Sicherheitsteilnehmer mit zwei unterbrechbaren Signalübertragungspfaden und einer Auswerteeinheit ausgebildet.

Die Busleitung und die an die Busleitung angeschlossenen Sicherheitsteilnehmer bilden den Testsignalpfad, wobei der Testsignalpfad einen mit dem Ausgang der Sicherheitseinheit verbundenen Hinleitungspfad und einen mit dem Sicherheitseingang der Sicherheitseinheit verbundenen Rückleitungspfad aufweist. Mehrere und vorzugsweise alle Sicherheitsteilnehmer des Systems sind entlang der Busleitung so in einer Linie angeordnet sind, dass sowohl der Hinleitungspfad als auch der Rückleitungspfad des Testsignalpfads durch dieselben Sicherheitsteilnehmer hindurch verlaufen. Die Sicherheitsteilnehmer sind derart eingerichtet, dass das Vorliegen eines nicht sicheren Zustands ihres Schutzgeräts eine Unterbrechung des Testsignalpfads bewirkt. Das Sicherheitssystem umfasst ferner ein vorzugsweise an dem Ende der Linie angeschlossenes, den Hinleitungspfad und den Rückleitungspfad des Testsignalpfads verbindendes Abschlusselement, wobei die Sicherheitseinheit dazu ausgebildet ist, an ihrem mit dem Hinleitungspfad verbundenen Ausgang ein Ausgangssignal bzw. Testsignal auszusenden, und wobei das Abschlusselement dazu ausgebildet ist, das Ausgangssignal von dem Hinleitungspfad zu empfangen und in Abhängigkeit von dem von dem Hinleitungspfad empfangenen Ausgangssignal ein gegenüber dem empfangenen Ausgangssignal verändertes Testsignal an den Rückleitungspfad des Testsignalpfads auszugeben.

Dadurch, dass sowohl der Hinleitungspfad als auch der Rückleitungspfad des Testsignalpfads durch dieselben Sicherheitsteilnehmer hindurch verlaufen, wird eine Linientopologie der mit dem gemeinsamen Testsignalpfad verbundenen Sicherheitsteilnehmer gebildet. Der erforderliche Verkabelungsaufwand wird dadurch noch weiter reduziert, weil es nicht erforderlich ist, den Hinleitungspfad und den Rückleitungspfad in getrennten Kabeln zu führen. Stattdessen können diese zumindest abschnittsweise in gemeinsamen Kabeln von einem Sicherheitsteilnehmer zum nächsten geführt werden. Das an dem Ende der Linie angeordnete Abschlusselement und die durch das Abschlusselement durchgeführte Veränderung bzw. Umwandlung des von dem Hinleitungspfad empfangenen Ausgangssignals in ein an den Rückleitungsfad ausgegebenes Testsignal dient dabei dazu, einen Querschluss zwischen dem Hinleitungspfad und dem Rückleitungspfad des Testsignalpfads erkennen zu können. Die Erwartungshaltung, auf die die Sicherheitseinheit das an dem Sicherheitseingang empfangene Testsignal überprüft, ist dabei vorzugsweise so ausgebildet, dass das Erfüllen der Erwartungshaltung die durch das Abschlusselement durchgeführte Signalveränderung bzw. -umwandlung voraussetzt und eine Überbrückung des Abschlusselements infolge eines solchen Querschlusses zu einer Verletzung der Erwartungshaltung und somit zu einem Ansprechen der Sicherheitsfunktion führt, beispielsweise wenn infolge eines Querschlusses ein gegenüber dem ausgesendeten Ausgangssignal unverändertes eingehendes Testsignal empfangen wird. Somit wird trotz der Linientopologie und der dabei bestehenden Möglichkeit eines Querschlusses zwischen Hin- und Rückleitungspfad des Testsignalpfads ein hohes Sicherheitsniveau bei geringem Verkabelungsaufwand erreicht.

Gemäß einer vorteilhaften Ausführungsform ist das Sicherheitssystem dazu eingerichtet, neben der über den Testsignalpfad übermittelten Sicherheitsinformation zusätzlich Daten zwischen der Sicherheitseinheit und dem oder den Sicherheitsteilnehmern und/oder einem wie vorstehend beschriebenen Abschlusselement zu übertragen. Dabei kann die Sicherheitseinheit dazu ausgebildet sein, Daten an die Sicherheitsteilnehmer und/oder das Abschlusselement zu senden und/oder die Sicherheitsteilnehmer und/oder das Abschlusselement können dazu ausgebildet sein, Daten an die Sicherheitseinheit zu senden. Insbesondere können der bzw. die Sicherheitsteilnehmer dazu eingerichtet sein, im Falle eines Diskrepanzfehlers des jeweiligen Sicherheitsteilnehmers eine Nachricht an die Sicherheitseinheit zu senden, anhand der die Sicherheitseinheit den Fehlerfall erkennen und vorzugsweise den fehlerhaften Sicherheitsteilnehmer identifizieren kann. Vorzugsweise ermöglicht es diese Kommunikation der Sicherheitseinheit, einen Diskrepanzfehler von einem Ansprechen der Sicherheitsfunktion aufgrund eines nicht sicheren Zustands eines Schützgeräts bei fehlerfreiem Betrieb-des Sicherheitssystems zu unterscheiden.

Das Sicherheitssystem weist bevorzugt einen von den Sicherheitsteilnehmern und vorzugsweise auch dem Abschlusselement gemeinsam genutzten Datenpfad auf, wobei vorzugsweise die Sicherheitsteilnehmer und ggf. das Abschlusselement in einer Reihe hintereinander zum Empfangen und/oder Senden von Daten an den Datenpfad angeschlossen und mit diesem verbunden sind. Der Datenpfad kann einen mit einem Ausgang der Sicherheitseinheit verbundenen Datenhinleitungspfad für die Übertragung von der Sicherheitseinheit erzeugter, ausgehender Daten und/oder einen mit einem Eingang der Sicherheitseinheit verbundenen Datenrückleitungspfad für die Übertragung von den Sicherheitsteilnehmern und/oder dem Abschlusselement erzeugter Daten an die Sicherheitseinheit aufweisen. Vorzugsweise bilden ein Datenhinleitungspfad und ein Datenrückleitungspfad einen geschlossenen an einen Ausgang und einen Eingang der Sicherheitseinheit angeschlossenen ringförmigen Datenpfad. Bevorzugt laufen dabei sowohl der Datenhinleitungspfad als auch der Datenrückleitungspfad durch dieselben Sicherheitsteilnehmer des Sicherheitssystems hindurch, so dass die Sicherheitsteilnehmer auch in Bezug auf den ringförmigen Datenpfad eine Linientopologie bilden, wobei das Abschlusselement an dem Ende der Linie angeordnet ist.

Der Datenhinleitungspfad kann durch den Hinleitungspfad des Testsignalpfads gebildet und mit diesem identisch sein, wobei das von der Sicherheitseinheit an den Hinleitungspfad des Testsignalpfads ausgesendete Ausgangssignal vorzugsweise die an die Sicherheitsteilnehmer gesendeten Ausgangsdaten der Sicherheitseinheit umfasst. Somit kann auf einen separaten Datenhinleitungspfad verzichtet werden. Der Datenrückleitungspfad ist vorzugsweise als separater Signalpfad ausgebildet.

Das Sicherheitssystem und dessen hierein beschriebene Sicherheitsfunktion erfüllen vorzugsweise den Sicherheitslevel SIL 3 gemäß der Norm IEC 61508 und/oder den Sicherheitslevel Performance Level e ("PL e") gemäß der Norm EN ISO 13849-1. Der Sicherheitseingang der Sicherheitseinheit umfasst bevorzugt einen sicheren Eingang. Der sichere Eingang zeichnet sich durch eine fehlersichere Auswertung des eingehenden Signals in der Sicherheitseinheit aus, wozu zum Beispiel eine zweikanalige Auswertung erfolgen kann, die z.B. durch zwei parallel arbeitende redundante und einander kontrollierende Mikroprozessoren durchgeführt wird.

Die Erfindung betrifft auch einen Sicherheitsteilnehmer bzw. ein Anschaltungsmodul für einen Sicherheitsteilnehmer, das zum Einsatz in einem wie hierin beschriebenen erfindungsgemäßen Sicherheitssystem ausgebildet ist und eine wie hierin beschriebene Auswerteeinheit umfasst. Die hierin unter Bezugnahme auf das erfindungsgemäße Sicherheitssystem und insbesondere die Auswerteeinheit beschriebenen vorteilhaften Ausführungsformen des Sicherheitsteilnehmers bzw. Anschaltungsmoduls und die entsprechenden Vorteile gelten entsprechend.

Der erfindungsgemäße Sicherheitsteilnehmer ist in Anspruch 13 beschrieben und umfasst ein Schutzgerät, einen ersten und einen zweiten unterbrechbaren Signalübertragungspfad, die bei dem Eintreten eines nicht sicheren Zustands des Schutzgeräts gemeinsam unterbrechbar sind, wenigstens einen Testsignalpfad, der wenigstens einen des ersten und zweiten unterbrechbaren Signalübertragungspfads umfasst und der zwischen einem Testsignaleingang und einem Testsignalausgang des Sicherheitsteilnehmers angeordnet ist, und einen in dem Testsignalpfad angeordneten Unterbrechungsschalter. Ferner umfasst der Sicherheitsteilnehmer eine Auswerteeinheit, die mit dem ersten Signalübertragungspfad und/oder einem die Unterbrechung des ersten Signalübertragungspfads steuernden ersten Schaltsignalausgang des Schutzgeräts verbunden ist, die mit dem zweiten Signalübertragungspfad und/oder einem die Unterbrechung des ersten Signalübertragungspfads steuernden zweiten Schaltsignalausgang des Schutzgeräts verbunden ist und die dazu eingerichtet ist, zu überprüfen, ob der erste und zweite Signalübertragungspfad gemeinsam unterbrochen oder zur Unterbrechung angesteuert werden, und um den Unterbrechungsschalter zu öffnen, wenn der erste und zweite unterbrechbare Signalübertragungspfad nicht gemeinsam unterbrochen oder zur Unterbrechung angesteuert werden.

Das erfindungsgemäße Anschaltungsmodul ist in Anspruch 14 beschrieben und umfasst einen unterbrechbaren und/oder unterbrochenen Testsignalpfad, der zwischen einem Testsignaleingang und einem Testsignalausgang des Anschaltungsmoduls angeordnet ist, zwei Anschlüsse, die jeweils entweder zur seriellen Einbindung eines einen Hinleiter und einen Rückleiter aufweisenden unterbrechbaren Signalübertragungspfads eines Schutzgeräts in den Testsignalpfad ausgebildet sind oder zur Verbindung mit einer mit einem Schaltsignalausgang eines Schutzgeräts verbundenen Schaltsignalleitung ausgebildet und mit einem Steuereingang eines in dem Testsignalpfad angeordneten unterbrechbaren Signalübertragungspfads des Anschaltungsmoduls verbunden ist, so dass der unterbrechbare Signalübertragungspfad abhängig von einem an dem Anschluss eingehenden Schaltsignal unterbrechbar ist. Ferner umfasst das Anschaltungsmodul einen in dem Testsignalpfad angeordneten Unterbrechungsschalter und eine Auswerteeinheit, die mit den beiden Anschlüssen verbunden ist und die dazu eingerichtet ist, bei der Verwendung des Anschaltungsmoduls in dem Sicherheitssystem zu überprüfen, ob die über die beiden Anschlüsse jeweils in den Testsignalpfad eingebundenen oder durch einen mit dem Anschluss verbundenen Schaltsignalausgang ansteuerbaren, unterbruchbaren Signalübertragungspfade gemeinsam unterbrochen oder zur Unterbrechung angesteuert werden, und um den Unterbrechungsschalter zu öffnen, wenn die unterbrechbaren Signalübertragungspfade nicht gemeinsam unterbrochen oder zur Unterbrechung angesteuert werden.

Nachfolgend wird die Erfindung beispielhaft anhand einer vorteilhaften Ausführungsform unter Bezugnahme auf die beigefügten. Figuren beschrieben. Es zeigen:
- Fig. 1: ein Sicherheitssystem gemäß einer Ausführungsform der Erfindung in schematischer Darstellung,
- Fig. 2: ein beispielhaftes Sicherheitssystem,
- Fig. 3: einen Sicherheitsteilnehmer eines Sicherheitssystems gemäß einer Ausführungsform der Erfindung,
- Fig. 4: einen Sicherheitsteilnehmer eines Sicherheitssystems gemäß einer weiteren Ausführungsform der Erfindung,
- Fig. 5: einen Sicherheitsteilnehmer eines Sicherheitssystems gemäß einer weiteren Ausführungsform der Erfindung,
- Fig. 6: einen Sicherheitsteilnehmer eines Sicherheitssystems gemäβ einer weiteren Ausführungsform der Erfindung,
- Fig. 7: beispielhafte, durch die Testschaltung des Sicherheitsteilnehmers von Fig. 6 übertragene Strom- und Spannungssignale, und
- Fig. 8: ein Sicherheitssystem gemäß einer weiteren Ausführungsform der Erfindung.

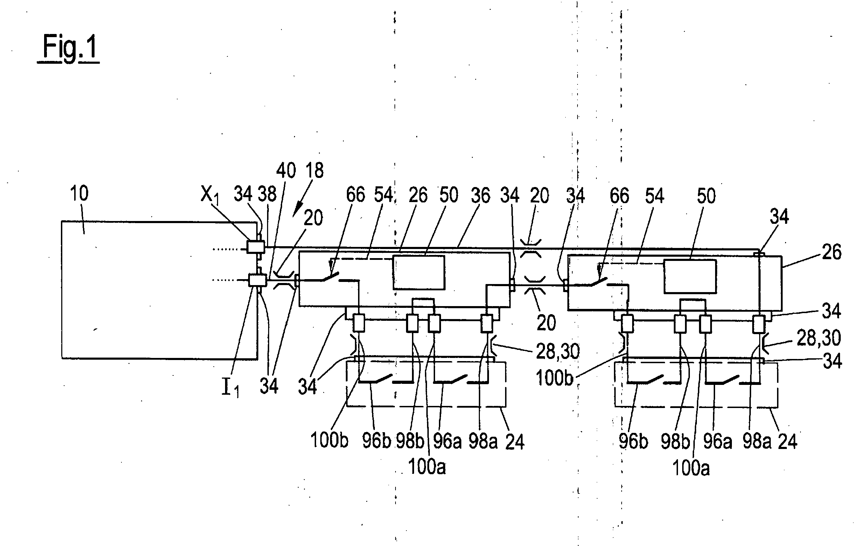

Fig. 1 zeigt ein Sicherheitssystem gemäß einer ersten Ausführungsform der Erfindung. Das Sicherheitssystem umfasst eine Sicherheitssteuerung 10, die in einem Schaltschrank angeordnet sein kann und einen Ausgang X1 sowie einen Sicherheitseingang I1 umfasst.

Das Sicherheitssystem umfasst eine Testsignalleitung bzw. Busleitung 18 mit mehreren Kabeln bzw. Buskabeln 20, wobei eines der Kabel 20 an den Ausgang X1 und eines der Kabel 20 an den Eingang I1 der Sicherheitssteuerung 10 angeschlossen ist. Das Sicherheitssystem umfasst ferner mehrere Sicherheitsteilnehmer 22, die über die Kabel 20 der Busleitung 18 mit der Sicherheitssteuerung 10 verbunden sind. Die Sicherheitsteilnehmer 22 umfassen jeweils ein Schutzgerät 24 und ein Anschaltungsmodul 26, welches über eine durch ein Anschaltungskabel 28 gebildete Anschaltungsleitung 30 mit dem jeweiligen Schutzgerät 24 verbunden ist und welches direkt mit den jeweils benachbarten Kabeln 20 verbunden ist.

Ein Kabel ist in den Figuren prinzipiell jeweils durch zwei aufeinander zu gewandte Klammern dargestellt, die den Mantel des Kabels repräsentieren, wobei in der Regel eine der Klammern mit dem entsprechenden Bezugszeichen versehen ist, d.h. dem Bezugszeichen 20 für ein Buskabel bzw. dem Bezugszeichen 28 für ein Anschaltungskabel. Die zwischen den Klammern eines Kabels 20, 28 jeweils eingezeichneten ein oder mehreren Linien repräsentieren jeweils eine in dem jeweiligen Kabelmantel angeordnete elektrische Leitung, welche aus einer oder mehreren in dem Kabelmantel angeordneten elektrischen Leitungsadern bestehen kann.

Ein Schutzgerät 24 kann beispielsweise als Not-Aus-Taster, als Zuhaltungseinrichtung einer Sicherheitstür, als Lichtschranke, als Laserscanner oder anderes sicheres Schutzgerät ausgebildet sein, welches dazu eingerichtet ist, einen sicheren oder nicht sicheren Zustand an einer Anlage zu erfassen bzw. zu erkennen.

Das Sicherheitssystem ist als Feldbussystem ausgebildet, d.h. dass Komponenten des Sicherheitssystems, insbesondere die Sicherheitsteilnehmer 22 örtlich verteilt angeordnet sind. Der Abstand zwischen zwei verschiedenen Sicherheitsteilnehmern 22 kann dabei erheblich sein und z.B. einen oder mehrere Meter betragen. Die Verbindung der Sicherheitssteuerung 10, der Schutzgeräte 24 und der Anschaltungsmodule 26 mit den Kabeln 20 und den Anschaltungskabeln 28 sind jeweils durch eine beispielsweise aus einem Steckverbinder, z.B. vom Typ M12, des einen Elements und einer entsprechenden Steckerbuchse des anderen Elements bestehende elektrische Steckverbindung 34 gebildet. Die Schutzgeräte 24 und Anschaltungsmodule 26 weisen jeweils ein eigenes Gehäuse auf, welches vorzugsweise nach der Gehäuseschutzart IP 67 oder IP 20 oder einer sonstigen gegen Schmutz oder Feuchtigkeit schützenden Gehäuseschutzart ausgebildet ist. Die Kabel 20 und Anschaltungskabel 28 verlaufen außerhalb der Gehäuse und sind als gegen Schmutz oder Feuchtigkeit schützende, für die Verlegung außerhalb von Gehäusen geeignete und zulässige Standard-Sensor/Aktor-Kabel, beispielsweise vom Typ M12, mit einem Leiter- bzw. Aderquerschnitt von vorzugsweise mindestens 0,34 mm² ausgebildet. Den Abständen zwischen den Sicherheitsteilnehmern 22 entsprechend kann ein Buskabel 20 eine Länge von z.B. einem oder mehreren Metern aufweisen.

Die Busleitung 18 bzw. jeweilige Adern der Kabel 20 der Busleitung 18 und die an die Busleitung 18 angeschlossenen Sicherheitsteilnehmer 22 bilden einen ringförmigen Testsignalpfad 36 mit einem mit dem Ausgang X1 der Sicherheitssteuerung 10 verbundenen Hinleitungspfad 38 und einem mit dem Sicherheitseingang I1 der Sicherheitssteuerung 10 verbundenen Rückleitungspfad 40.

Das Anschaltungsmodul 26 eines Sicherheitsteilnehmers 22 umfasst jeweils eine Auswerteeinheit 50, die im vorliegenden Ausführungsbeispiel einen Mikroprozessor mit einer eigenen Zeitbasis umfasst und die auch als Logikeinheit bezeichnet werden kann. Die Auswerteeinheit 50 ist über einen entsprechenden Signalpfad 54 mit dem Steuereingang eines in dem Testsignalpfad 36 angeordneten und in diesen seriell eingebundenen Unterbrechungsschalters 66 verbunden, so dass die Auswerteeinheit 50 den Unterbrechungsschalter 66 abhängig von einer im Nachstehenden erläuterten Überprüfung ansteuern kann, um den Unterbrechungsschalter 66 und damit den Testsignalpfad 36 zu unterbrechen.

Die Schutzgeräte 24 der Sicherheitsteilnehmer 22 sind als zweikanalige, d.h. jeweils zwei Schutzkanäle aufweisende Schutzgeräte 24 ausgebildet, die jeweils zwei äquivalent schaltende und im nicht sicheren Zustand des Schutzgeräts 24 gemeinsam unterbrochene elektrische Schalter 96a, 96b umfassen, die jeweils einen Schutzkanal des Schutzgeräts 24 bilden. Konkret kann es sich bei einem solchen Schutzgerät 24 beispielsweise um einen zweikanaligen Not-Aus-Taster handeln, dessen Schalter 96a, 96b im sicheren, d.h. nicht betätigten, Zustand des Not-Aus-Tasters geschlossen sind und dessen Schalter 96a, 96b im nicht sicheren, d.h. betätigten, Zustand des Not-Aus-Tasters geöffnet sind. Ebenso kann es sich um eine Zuhaltungseinrichtung einer Sicherheitstür handeln, wobei die Schalter 96a, 96b im sicheren Zustand, d.h. bei geschlossener Sicherheitstür, geschlossen sind und die Schalter 96a, 96b im nicht sicheren Zustand, d.h. bei geöffneter Sicherheitstür, geöffnet sind.

Die Schalter 96a, 96b sind jeweils über einen Hinleiter 98a bzw. 98b und einen Rückleiter 100a bzw. 100b des Anschaltungskabels 28 mit dem Anschaltungsmodul 26 verbunden, wobei jeder Schalter 96a, 96b mit dem zugehörigen Hin- und Rückleiter 98a, 98b, 100a, 100b jeweils einen unterbrechbaren Signalübertragungspfad des Sicherheitsteilnehmers 22 bildet. Wie in Fig. 1 gezeigt, sind die unterbrechbaren Signalübertragungspfade mit den Schaltern 96a, 96b über das jeweilige Anschaltungsmodul 26 jeweils seriell in den Testsignalpfad 36 eingeschaltet und miteinander elektrisch in Serie geschaltet.

Die Auswerteeinheit 50 jedes Sicherheitsteilnehmers 22 ist über in Fig. 1 nicht eigens dargestellte Signalpfade mit den Hinleitern 98a, 98b und Rückleitern 100a, 100b der beiden unterbrechbaren Signalübertragungspfade des Sicherheitsteilnehmers 22 verbunden und ist dazu eingerichtet, über diese Signalpfade die Schaltzustände der beiden Schalter 96a, 96b unabhängig voneinander abzufragen. Die Auswerteeinheit 50 überwacht die Schaltzustände der beiden Schalter 96a, 96b auf eine Diskrepanz, d.h. auf einen voneinander abweichenden Schaltzustand. Insbesondere überprüft die Auswerteeinheit 50 bei dem Auftreten eines nicht sicheren Zustands des Schutzgeräts 24, ob die beiden Schalter 96a, 96b bis auf eine vorgegebene zulässige Diskrepanzzeit gleichzeitig unterbrochen werden. Wenn dies nicht der Fall ist, öffnet die Auswerteeinheit 50 den Unterbrechungsschalter 66 und unterbricht dadurch den Testsignalpfad 36.

Im Betrieb des in Fig. 1 gezeigten Sicherheitssystems erzeugt die Sicherheitssteuerung 10 ein dynamisches Ausgangs- bzw. Testsignal und sendet dieses über den Ausgangs X1 an den Testsignalpfad 36 aus. Dieses Ausgangs- bzw. Testsignal ist vorzugsweise ein dynamisches, d.h. zeitveränderliches, Signal. Das Ausgangssignal kann ein binärwertiges Signal sein, beispielsweise ein binärwertiges auf elektrischer Spannung basierendes Signal, welches zwischen einem hohen Spannungspegel von beispielsweise 24 Volt und einem niedrigen Spannungspegel von beispielsweise 0 Volt oder Massepotential wechselt. Das Ausgangssignal kann z.B. mit einer vorgegebenen Zykluszeit periodisch auftretende Testlücken mit einer vorgegebenen Dauer aufweisen, wobei das Signal während der Testlücken jeweils dauerhaft einen niedrigen Signalpegel aufweist und zwischen zwei aufeinander folgenden Testlücken einen dauerhaft hohen Signalpegel aufweist.

Die Sicherheitssteuerung 10 ist dazu ausgebildet, das an ihrem Sicherheitseingang I1 eingehende Testsignal zu empfangen, mit einer in der Sicherheitssteuerung 10 konfigurierten Erwartungshaltung zu vergleichen und um im Falle einer Verletzung der Erwartungshaltung eine Sicherheitsabschaltung der durch die Sicherheitsteilnehmer 22 überwachten Anlage einzuleiten. Im vorliegenden Ausführungsbeispiel erwartet die Sicherheitssteuerung 10 ein gegenüber dem von der Sicherheitssteuerung 10 an dem Ausgang X1 ausgesendeten Ausgangssignal im Wesentlichen unverändertes, an dem Sicherheitseingang I1 eingehendes Testsignal. Die Sicherheitssteuerung 10 kann dabei das eingehende Signal z.B. auf das zu dem ausgesendeten Signal synchrone Auftreten von Testlücken der erwarteten Dauer überprüfen.

In dem sicheren Zustand aller Schutzgeräte 24 und im fehlerfreien Zustand des Sicherheitssystems sind die Schalter 96a, 96b der Schutzgeräte 24 und die Unterbrechungsschalter 66 geschlossen, so dass das von der Sicherheitssteuerung 10 ausgesendete Ausgangssignal über den Testsignalpfad 36 bis zu dem Sicherheitseingang I1 der Sicherheitssteuerung 10 gelangt und die Erwartungshaltung der Sicherheitssteuerung 10 erfüllt wird.

Aufgrund der Serienschaltung der Schalter 96a, 96b in dem Testsignalpfad 36 wird der Testsignalpfad 36 unterbrochen, wenn aufgrund des Eintretens eines nicht sicheren Zustands eines Schutzgeräts 24 zumindest einer der Schalter 96a, 96b geöffnet wird. In diesem Fall wird das Ausgangssignal nicht bis zu dem Sicherheitseingang I1 übertragen, so dass die Erwartungshaltung der Sicherheitssteuerung 10 verletzt und eine Sicherheitsabschaltung durchgeführt wird.

Zusätzlich führt ein Diskrepanzfehler eines Sicherheitsteilnehmers 22, d.h. ein nicht-gleichzeitiges Öffnen beider Schalter 96a, 96b beispielsweise aufgrund eines festgeschweißten Schalters 96a, 96b dazu, dass die zugehörige Auswerteeinheit 50 den Unterbrechungsschalter 66 öffnet und dadurch ebenfalls den Testsignalpfad 36 unterbricht. Dadurch kann eine Abschaltung der Anlage verursacht werden und ein Wiedereinschalten der Anlage verhindert werden, da eine Wiedereinschaltung der Anlage nach einer Sicherheitsabschaltung durch die Sicherheitssteuerung 10 erst zugelassen wird, wenn wieder die erwartete Testsignalübertragung möglich ist. Die Auswerteeinheit 50 kann den Unterbrechungsschalter 66 zumindest so lange öffnen und dadurch ein Wiedereinschalten der Anlage verhindern, bis ein durch die Auswerteeinheit 50 erkannter Diskrepanzfehler behoben wurde, beispielsweise durch Austausch des zugehörigen Schutzgeräts 24. Dadurch kann es verhindert werden, dass ein solcher Diskrepanzfehler unerkannt bleibt und durch die Sicherheitssteuerung 10 tolieriert wird und ohne Behebung des Fehlerzustands eine Wiedereinschaltung der Anlage erfolgt.

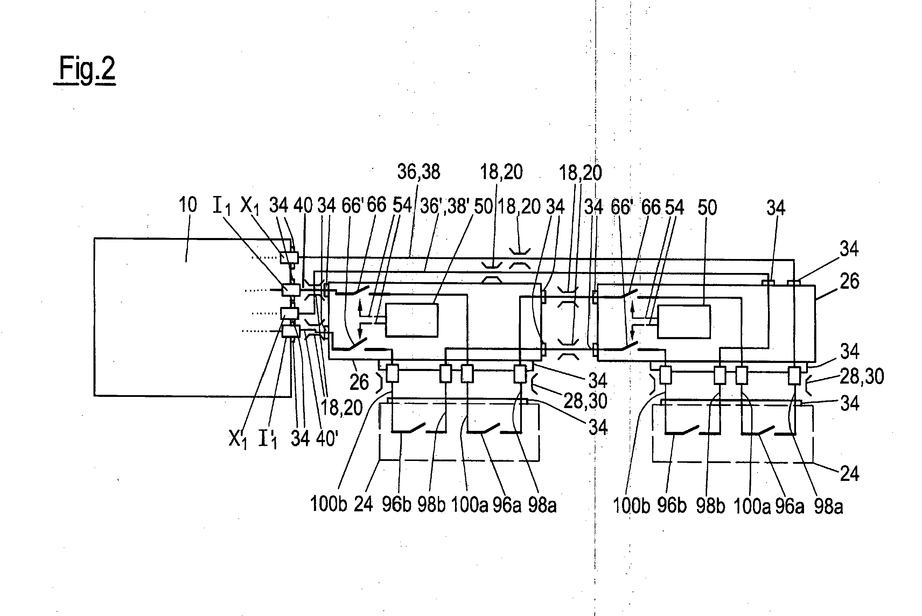

Fig. 2 zeigt ein beispielhaftes Sicherheitssystem, welches abgesehen von den nachfolgend beschriebenen Unterschieden im Wesentlichen dem in Fig. 1 gezeigten Sicherheitssystem entspricht.

Das in Fig. 2 gezeigte Sicherheitssystem umfasst eine Sicherheitssteuerung 10 mit zwei getrennten Testsignalpfaden 36, 36', die jeweils ringförmig zwischen einem Augang X1, X1' und einem Sicherheitseingang I1, I1' der Sicherheitssteuerung 10 angeordnet sind und die sich jeweils durch beide Sicherheitsteilnehmer 22 hindurch erstrecken.

Dabei ist bei jedem Sicherheitsteilnehmer 22 der zu einem Schalter 96a gehörige unterbrechbare Signalübertragungspfad in dem einen Testsignalpfad 36 und der zu dem anderen Schalter 96b gehörige unterbrechbare Signalübertragungspfad in dem anderen Testsignalpfad 36' angeordnet, so dass die Schalter 96a der beiden Sicherheitsteilnehmer 22 in dem Testsignalpfad 36 und die Schalter 96b der beiden Sicherheitsteilnehmer 22 in dem Testsignalpfad 36' elektrisch in Serie geschaltet sind.

Jeder Sicherheitsteilnehmer 22 weist zwei Unterbrechungsschalter 66, 66' auf, die jeweils in einem der beiden Testsignalpfade 36, 36' angeordnet sind und die über einen jeweiligen Signalpfad 54 mit der Auswerteeinheit 50 verbunden sind, wobei die Auswerteeinheit 50 dazu eingerichtet ist, bei einem Diskrepanzfehler, d.h. einem nicht gemeinsamen Schalten der Schalter 96a, 96b eines Schutzgeräts 24, zumindest einen und vorzugsweise beide Unterbrechungsschalter 66, 66' zu unterbrechen. Die Auswerteeinheit 50 öffnet dabei den Unterbrechungsschalter 66, 66' im Falle eines Diskrepanzfehlers so lange, bis der Fehler behoben ist. Eine fehlerhafte Fehlerquittierung wird dabei verhindert und ein Wiederanlaufen der Anlage wird verhindert, bis die Unterbrechungsschalter 66, 66' wieder geschlossen sind. Insbesondere kann keine fehlerhafte Fehlerquittierung durch die Sicherheitssteuerung 10 erfolgen, wenn durch einen Benutzer nach Ansprechen der Sicherheitsfunktion und bei Vorliegen eines Diskrepanzfehlers beide Schutzgeräte 24 in den nicht sicheren und anschließend in den sicheren Zustand gebracht werden, weil jede Auswerteeinheit 50 speziell die unterbrechbaren Signalübertragungspfade des zugehörigen Sicherheitsteilnehmers 22 auf die Diskrepanz überwacht und eine logische Kompensation durch einen fehlerfreien Schaltbetrieb eines anderen Sicherheitsteilnehmers 22 ausgeschlossen ist. Natürlich könnte das in Fig. 1 und 2 gezeigte System jeweils auch mehr als zwei Sicherheitsteilnehmer 22 umfassen, die in der dargestellten Weise in das System eingebunden sind.

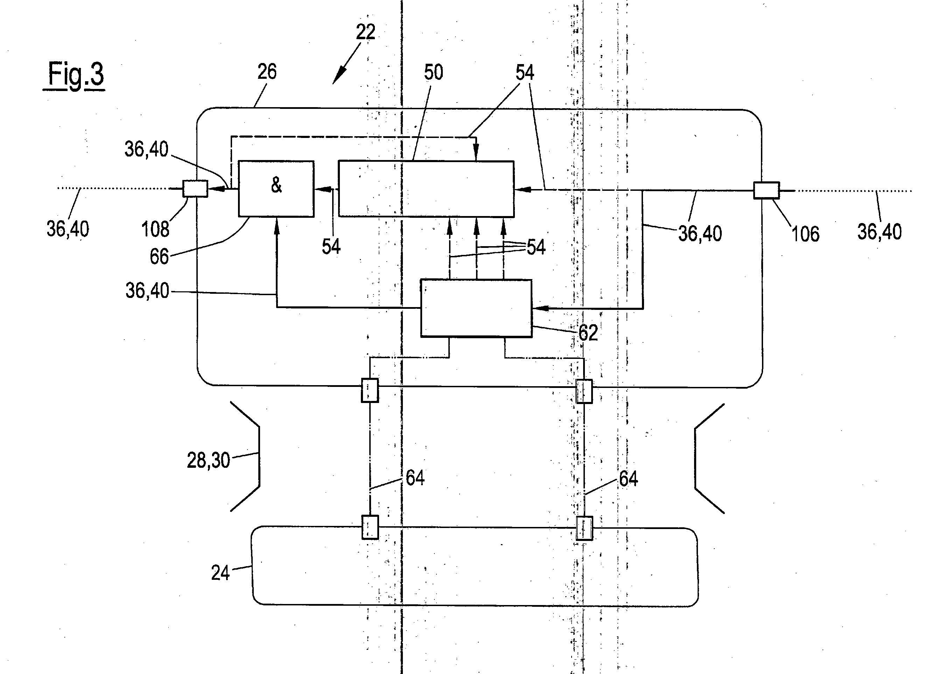

Fig. 3 zeigt einen Sicherheitsteilnehmer 22 zur Verwendung in einem erfindungsgemäßen Sicherheitssystem, welches beispielsweise dem in Fig. 1 gezeigten Sicherheitssystem entsprechen kann. Fig. 3 zeigt einen Sicherheitsteilnehmer 22 mit einem zweikanaligen, d.h. zwei Schutzkanäle aufweisenden, Schutzgerät 24. Jedem Schutzkanal des Schutzgeräts 24 ist einer von zwei in Fig. 3 nicht eigens dargestellten, in dem Rückleitungspfad 40 des Testsignalpfads 36 angeordneten unterbrechbaren Signalübertragungspfaden des Sicherheitsteilnehmers 22 bzw. des Schutzgeräts 24 zugeordnet, die bei dem Eintreten eines nicht sicheren Zustands des Schutzgeräts 24 gemeinsam unterbrochen werden. Die unterbrechbaren Signalübertragungspfade sind miteinander zwischen einem Testsignaleingang 106 und einem Testsignalausgang 108 des Sicherheitsteilnehmers 22 elektrisch in Reihe, d.h. in Serie, geschaltet.

Jeder Schutzkanal des Schutzgeräts 24 ist über eine Verbindung 64 der Anschaltungsleitung 30 mit dem Testsignalpfad 36 verbunden. Im vorliegenden Ausführungsbeispiel umfasst das Anschaltungsmodul 26 eine nachfolgend noch genauer erläuterte Testschaltung 62, die einen Abschnitt des Testsignalpfads 36 bildet, wobei die Schutzkanäle des Schutzgeräts 24 über die Verbindungen 64 im Bereich der Testschaltung mit dem Testsignalpfad 36 verbunden sind. Wie vorstehend in Bezug auf Fig. 1 und die dort gezeigten Sicherheitsteilnehmer 22 beschrieben, kann eine Verbindung 64 beispielsweise durch einen wie in Fig. 1 und 2 gezeigten Hinleiter 98a, 98b und einen Rückleiter 100a, 100b gebildet sein, zwischen denen ein in dem Schutzgerät 24 angeordneter unterbrechbarer elektrischer Schalter angeordnet ist, wobei prinzipiell auch ein unterbrechbarer optischer Signalübertragungspfad dort angeordnet sein könnte. Ebenso kann die Verbindung 64 eine mit einem Schaltsignalausgang, z.B. einem digitalen Schaltsignalausgang wie etwa einem OSSD-Ausgang, des Schutzgeräts 24 verbundene bevorzugt einadrige bzw. einkanalige Schaltsignalleitung umfassen, wobei durch den Schaltsignalausgang ein in dem Sicherheitsteilnehmer 22 bzw. in der Testschaltung 62 angeordneter unterbrechbarer Signalübertragungspfad angesteuert wird, um diesen abhängig von dem sicheren oder nicht sicheren Zustand des Schutzgeräts 24 zu öffnen und zu schließen. Das Bezugszeichen 64 in Fig. 3 bezeichnet also allgemein eine Verbindung zwischen einem Schutzkanal des Schutzgeräts 24 und dem Anschaltungsmodul 26, welche konkret z.B. durch einen Hinleiter und einen Rückleiter zu einem Schalter des Schutzgeräts 24 oder durch eine Schaltsignalleitung gebildet sein kann.

Die Auswerteeinheit 50 ist über mehrere Signalpfade 54 mit den unterbrechbaren Signalübertragungspfaden und/oder den Verbindungen 64 verbunden, um festzustellen, ob die ersten und zweiten unterbrechbaren Signalübertragungspfade gemeinsam unterbrochen oder zur Unterbrechung angesteuert werden, wenn ein nicht sicherer Zustand des Schutzgeräts 24 eintritt. Die Logikeinheit 50 kann dazu überprüfen, ob die beiden unterbrechbaren Signalübertragungspfade, gegebenenfalls bis auf eine vorgegebene zeitliche Toleranz, gleichzeitig unterbrochen werden. Wenn ein Schutzkanal des Schutzgeräts 24 einen wie vorstehend beschriebenen Schaltsignalausgang umfasst, mit dem ein unterbrechbarer Signalübertragungspfad angesteuert wird, kann die Logikeinheit 50 über die Verbindung 64 mit dem entsprechenden Schaltsignalausgang verbunden sein. Anstatt zu überprüfen, ob der jeweilige unterbrechbare Signalübertragungspfad tatsächlich unterbrochen wird, reicht es dann aus, wenn die Logikeinheit 50 überprüft, ob der unterbrechbare Signalübertragungspfad zur Unterbrechung angesteuert wird. Die Logikeinheit 50 steuert über einen zwischen der Auswerteeinheit 50 und dem Unterbrechungsschalter 66 angeordneten Signalpfad 54 den Unterbrechungsschalter 66 an, um diesen zu öffnen, wenn die zwei unterbrechbaren Signalübertragungspfade nicht gemeinsam unterbrochen oder zur Unterbrechung angesteuert werden.

Die Auswerteeinheit 50 kann auch dazu eingerichtet sein, einen Leitungsfehler einer oder mehrerer Verbindungsleitungen 64 zu erkennen, wie beispielsweise einen Querschluss zwischen verschiedenen Verbindungsleitungen 64 oder einen Kurzschluss zwischen einem Hinleiter und einem Rückleiter derselben Verbindungsleitung 64.

Wie in Fig. 3 ebenfalls gezeigt, ist die Auswerteeinheit über einen weiteren Signalpfad 54 auch mit dem Testsignalausgang 108 verbunden, so dass die Auswerteeinheit 50 auch das über den Testsignalausgang 108 ausgehende Testsignal überwachen kann. Die Auswerteeinheit 50 kann somit zusätzlich zu oder im Rahmen der vorstehend beschriebenen Diskrepanzüberwachung auch das ausgehende Testsignal des Sicherheitsteilnehmers 22 überwachen und ggf. abhängig von dieser Überwachung eine Unterbrechung des Unterbrechungsschalters 66 hervorrufen.

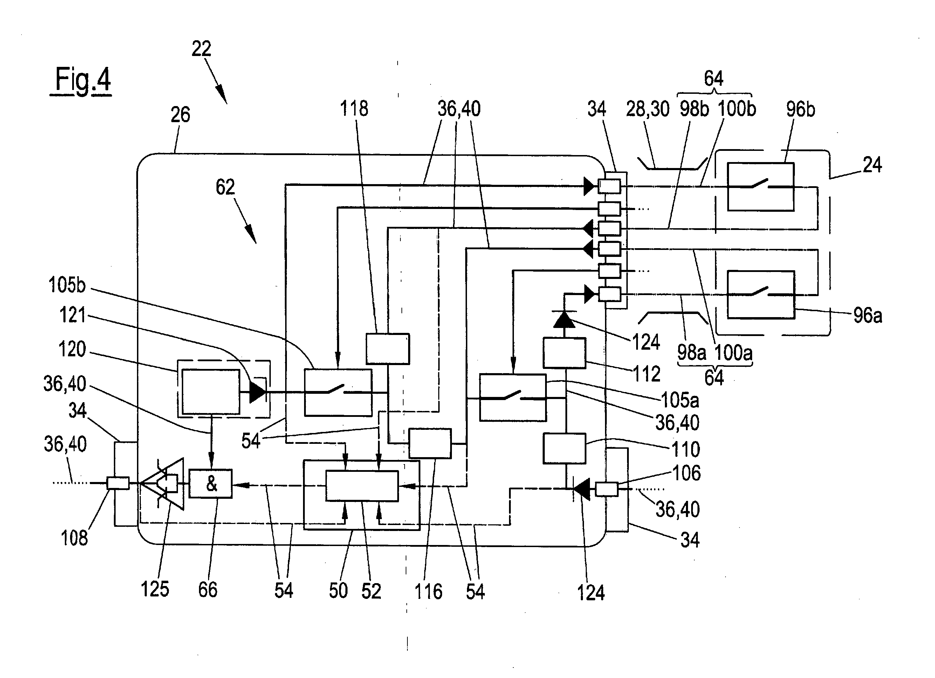

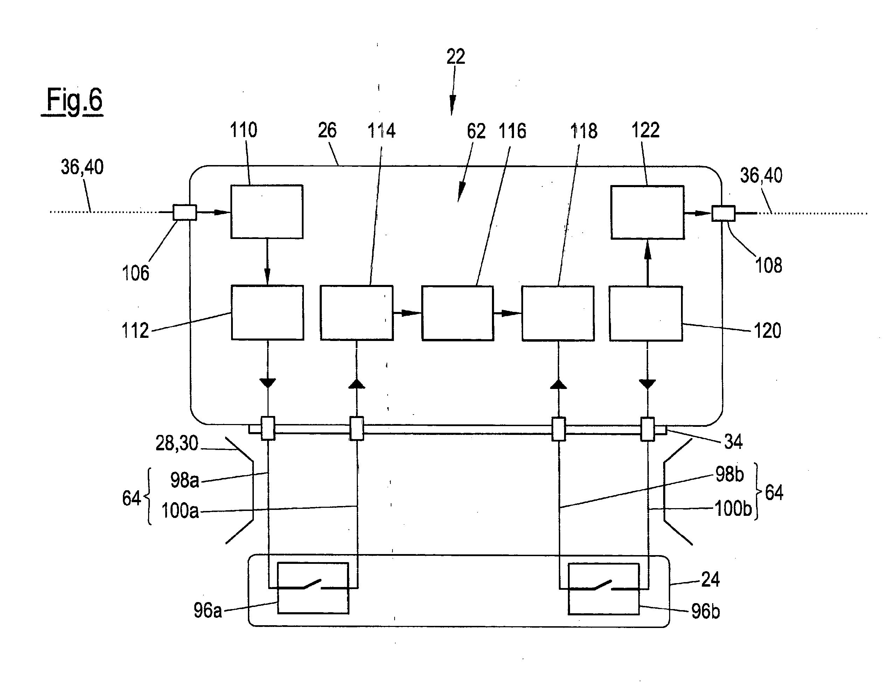

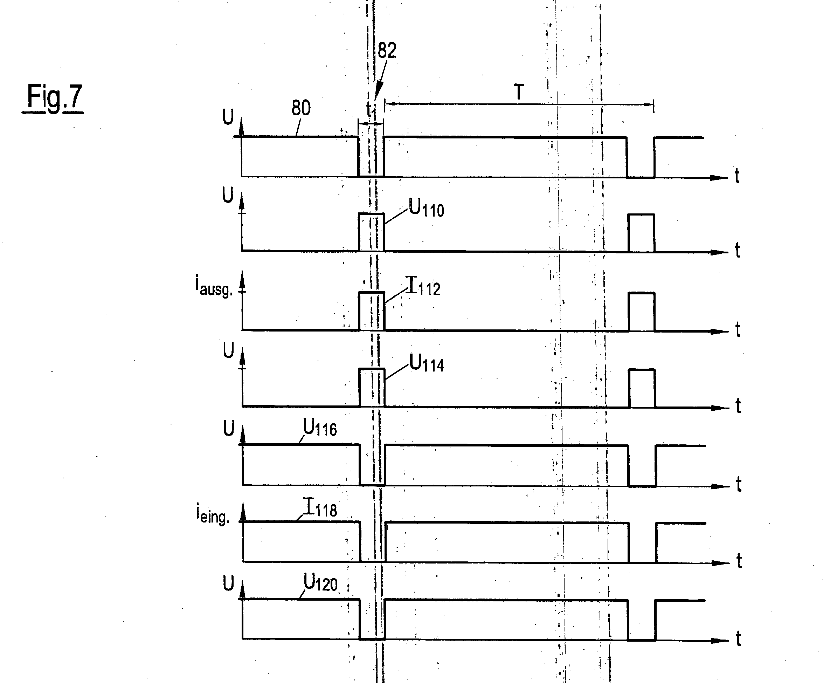

Fig. 4 zeigt eine weitere Ausführungsform eines Sicherheitsteilnehmers 22 zur Verwendung in einem wie in Fig. 1 und 2 gezeigten Sicherheitssystem mit einer Auswerteeinheit 50, die die Schutzkanäle des Schutzgeräts 24 auf eine Diskrepanz überprüft. Zusätzlich zeigt Fig. 4 die Bestandteile einer wie in Fig. 3 gezeigten und nachfolgend in Bezug auf Fig. 6 und 7 näher erläuterten Testschaltung 62 des Sicherheitsteilnehmers 22.

Bei dem in Fig. 4 gezeigten Sicherheitsteilnehmer 22 sind die unterbrechbaren Signalübertragungspfade wie bei den Sicherheitsteilnehmern von Fig. 1 und 2 durch Schalter 96a, 96b des Schutzgeräts 24 gebildet. Die Schalter 96a, 96b sind jeweils über einen Hinleiter 98a, 98b und einen Rückleiter 100a 100b der Anschaltungsleitung 30 mit dem Anschaltungsmodul 26 verbunden und über eine Testschaltung 62 elektrisch miteinander in Serie geschaltet, wie es nachfolgend in Zusammenhand mit Fig. 6 im Detail beschrieben ist. Die Auswerteeinheit 50, deren Mikroprozessor 52 in Fig. 4 ebenfalls gezeigt ist, ist über entsprechende Signalpfade 54 mit den beiden Hinleitern 98a, 98b und Rückleitern 100a, 100b verbunden. Die Auswerteeinheit 50 ist dazu ausgebildet, über die Signalpfade 54 den Schaltzustand der beiden Schalter 96a, 96b zu erfassen und zu überprüfen, ob die beiden Schalter 96a, 96b im Falle des Eintretens eines nicht sicheren Zustands des Schutzgeräts 24 gemeinsam unterbrochen werden, und um den Unterbrechungsschalter 66 über einen weiteren Signalpfad 54 anzusteuern und zu unterbrechen, wenn eine Diskrepanz der beiden Schalter 96a, 96b erkannt wird, d.h. wenn die beiden Schalter 96a, 96b nicht gemeinsam unterbrochen werden.

Das in Fig. 4 gezeigte Anschaltungsmodul 26 ist sowohl mit einem wie in Fig. 4 gezeigten Schutzgerät 24 mit elektrischen Schaltern 96a, 96b als auch alternativ mit einem nicht dargestellten Schutzgerät mit digitalen Schaltsignalausgängen verwendbar oder mit einem Schutzgerät 24 mit einer Kombination von beidem.

Das in Fig. 4 gezeigte Anschaltungsmodul 26 bzw. deren Testschaltung 62 weist dazu neben den für die Verbindungen 64 mit den Schaltern 96a, 96b über die Anschaltungsleitung 30 vorgesehenen Anschlüssen noch zwei weitere in dem Testsignalpfad 36 angeordnete elektrisch oder elektronisch ansteuerbare Schalter 105a, 105b auf, die beispielsweise Feldeffekttransistoren oder Bipolartransistoren umfassen können, und die abhängig von einem Schaltsignal eines entsprechenden Schaltsignalausgangs des Schutzgeräts 24 angesteuert und insbesondere bei Eintreten eines nicht sicheren Zustands des Schutzgeräts 24 geöffnet werden können, um den Testsignalpfad 36 zu unterbrechen. Die Schalter 105a, 105b stellen somit Signalübertragungspfade dar, die bei Anschluss entsprechender Schaltsignalausgänge des Schutzgeräts 24 normalerweise geschlossen sind bzw. durch die ständig ausgesendeten Schaltsignale des Schutzgeräts 24 in dem geschlossenen Zustand gehalten werden, und die bei dem Eintreten eines nicht sicheren Zustands des Schutzgeräts 24 gemeinsam unterbrochen werden. Das Anschaltungsmodul 26 weist dazu Anschlüsse auf, über die die Steuereingänge der elektrisch oder elektronisch ansteuerbaren Schalter 105a, 105b jeweils mit einem entsprechenden Schaltsignalausgang des Schutzgeräts 24 bzw. einer bevorzugt einadrigen Schaltsignalleitung der Anschaltungsleitung 30 verbindbar sind. Ist, wie in Fig. 4 gezeigt, ein Schutzgerät 24 ohne entsprechende Schaltsignalausgänge an die Schalter 105a, 105b angeschlossen, d.h. werden die Steuereingänge der Schalter 105a, 105b nicht mit einem Schaltsignal beaufschlagt, sind die Schalter 105a, 105b dauerhaft geöffnet.

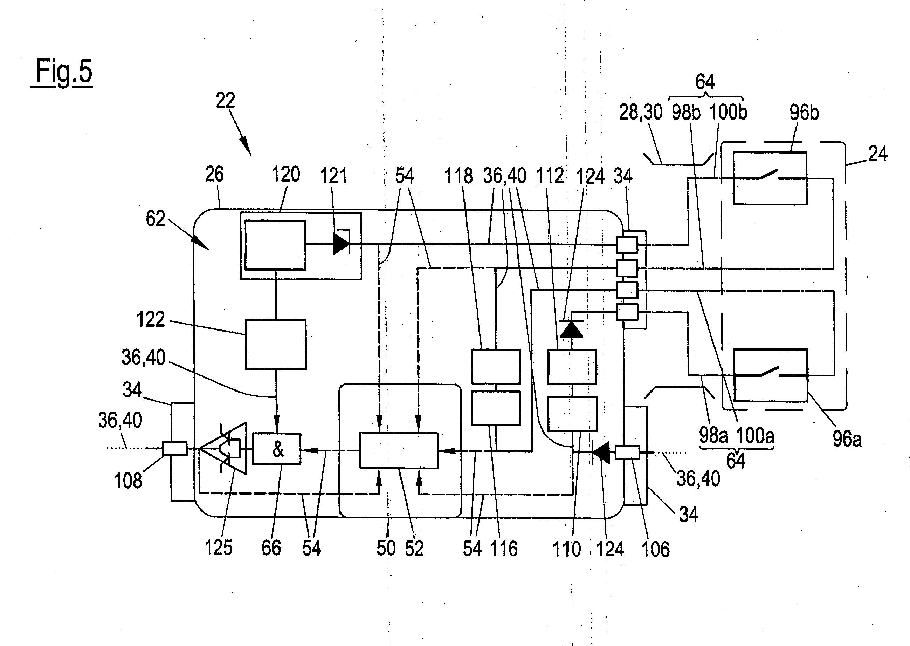

Ein dem Sicherheitsteilnehmer von Fig. 4 entsprechender Sicherheitsteilnehmer 22 mit einem Anschaltungsmodul 26, das nur für die Verwendung mit einem Schutzgerät 24 mit Schaltern 96a, 96b ausgebildet ist, ist in Fig. 5 gezeigt.

Fig. 4 und 5 zeigen darüber hinaus die einzelnen Komponenten der Testschaltung 62, die nachstehend in Bezug auf Fig. 6 genauer erläutert ist und die einen ersten Invertierer 110, eine gesteuerte Stromquelle 112, einen zweiten Invertierer 116, eine gesteuerte Stromsenke 118, ein Stromrichtungselement 120 mit einer Zenerdiode 121, eine Dynamikeinheit 122 (Fig. 5) und zwei Dioden 124 umfasst. Außerdem ist ein Signalverstärker oder Signaltreiber 125 gezeigt, der zwischen dem Unterbrechungsschalter 66 und dem Testsignalausgang 108 angeordnet ist und das Testsignal signaltreibend an den nachfolgenden Abschnitt des Rückleitungspfads 40 ausgibt.

Fig. 6 zeigt einen Sicherheitsteilnehmer 22, der im Wesentlichen dem in Fig. 4 und 5 gezeigten Sicherheitsteilnehmer 22 entspricht, mit der Testschaltung 62, die zum Erkennen eines Querschlusses oder anderen Fehlers in der Anschaltungsleitung 30 dient. Die zu der Diskrepanzüberprüfung vorgesehene Auswerteeinheit, der Unterbrechungsschalter und die entsprechenden Signalpfade sind in Fig. 6 der besseren Übersichtlichkeit halber nicht dargestellt.

An dem Testsignaleingang 106 des Anschaltungsmoduls 26 wird das über den Rückleitungspfad 40 des Testsignalpfads 36 übertragene dynamische Testsignal 80 (Fig. 7) empfangen. Wie vorstehend beschrieben, handelt es sich bevorzugt um ein spannungsbasiertes Signal, insbesondere binärwertiges Gleichspannungssignal, welches in periodischen Abständen Testlücken 82 einer vorgegebenen konstanten Dauer aufweist, während derer das Testsignal 80 dauerhaft einen niedrigen Spannungspegel aufweist und zwischen denen das Testsignal dauerhaft einen hohen Spannungspegel aufweist.

Der Testsignaleingang 106 ist mit dem Eingang eines Invertierers 110 verbunden, der das eingehende Testsignal empfängt und invertiert und an seinem Ausgang ein invertiertes, bevorzugt ebenfalls spannungsbasiertes Testsignal ausgibt. Bei der Invertierung wird ein hoher Signal- bzw. Spannungspegel des eingehenden Signals in einen niedrigen Signal- bzw. Spannungspegel des ausgehenden Signals umgewandelt und ein niedriger Signal bzw. Spannungspegel des eingehenden Signals wird in einen hohen Signal- bzw. Spannungspegel des ausgehenden Signals umgewandelt. Zwischen dem Testsignaleingang 106 und dem Eingang des Invertierers 110 kann, wie in Fig. 4 und 5 gezeigt, ebenfalls eine Diode 124 angeordnet sein, die in positiver Signalflussrichtung des Testsignals gepolt ist und einen positiven Stromfluss von dem Sicherheitsteilnehmer 22 zu dem vorhergehenden Abschnitt des Rückleitungspfads 40 des Testsignalpfads 36 verhindert. Diese Diode 124 ist aber nicht unbedingt erforderlich.

Der Ausgang des Invertierers 110 ist mit dem Steuereingang der gesteuerten Stromquelle 112 verbunden, die dazu ausgebildet ist, das von dem Invertierer 110 gelieferte Gleichspannungssignal in ein Gleichstromsignal umzuwandeln, derart, dass ein hoher Pegel des von dem Invertierer 110 gelieferten Gleichspannungssignal mit einem hohen Pegel des Gleichstromsignals korrespondiert und ein niedriger Pegel des von dem Invertierer 110 gelieferten Gleichspannungssignal mit einem niedrigen Pegel des Gleichstromsignals korrespondiert. Die gesteuerte Stromquelle 112 ist als aktive Stromquelle ausgebildet und dazu eingerichtet, an ihrem Ausgang aktiv einen, bezogen auf die technische Stromflussrichtung, positiven ausgehenden elektrischen Stromfluss zu erzeugen, der wie vorstehend beschrieben von dem anliegenden Steuersignal abhängt. Zwischen dem Ausgang der gesteuerten Stromquelle 112 und dem Hinleiter 98a kann, wie in Fig. 4 und 5 gezeigt, eine in der Richtung des ausgehenden Stroms der Stromquelle 112 gepolte Diode 124 angeordnet sein, die einen in die Stromquelle 112 eingehenden Stromfluss verhindert. Ein eingehender Stromfluss in die Stromquelle 112 kann prinzipiell auf beliebige Weise verhindert werden, beispielsweise indem die Stromquelle 112 selbst so ausgebildet ist, dass ein solcher Strom vermieden wird. Ebenso könnte anstelle der Diode 124 ein ähnliches Sperrelement vorgesehen sein, welches einen eingehenden Strom in die Stromquelle 112 verhindert.

Das von der gesteuerten Stromquelle 112 erzeugte Stromsignal wird über den ersten elektrischen Schaltpfad, d.h. über den Hinleiter 98a, den im sicheren Zustand des Schutzgeräts 24 geschlossenen Schalter 96a und den Rückleiter 100a, zu einem Stromflusselement 114 der Testschaltung 62 übertragen. Das Stromflusselement 114 ist eine elektrische Last bzw. ein passives elektrisches Element oder Bauteil und ist dazu ausgebildet, an seinem Eingang das über den Rückleiter 100a übertragene Stromsignal zu empfangen und an seinem Ausgang ein Gleichspannungssignal auszugeben, das von dem empfangenen Stromsignal abhängt und zwar im vorliegenden Ausführungsbeispiel derart, dass ein hoher Strompegel des eingehenden Stromsignals mit einem hohen Spannungspegel des ausgehenden Spannungssignals korrespondiert und ein niedriger Strompegel des eingehenden Stromsignals mit einem niedrigen Spannungspegel des ausgehenden Spannungssignals korrespondiert.

Das von dem Stromflusselement 114 erzeugte Spannungssignal wird an einen zweiten Invertierer 116 übertragen, der das Signal empfängt und invertiert und an seinem Ausgang ein invertiertes Signal ausgibt, wobei bei der Invertierung ein hoher Signal- bzw. Spannungspegel des eingehenden Signals in einen niedrigen Signal- bzw. Spannungspegel des ausgehenden Signals umgewandelt wird und ein niedriger Signal- bzw. Spannungspegel des eingehenden Signals in einen hohen Signal- bzw. Spannungspegel des ausgehenden Signals umgewandelt wird.

Der Ausgang des Invertierers 116 ist mit einem Steuereingang einer gesteuerten Stromsenke 118 verbunden, die dazu ausgebildet ist, das von dem Invertierer 116 gelieferte Gleichspannungssignal in ein Gleichstromsignal umzuwandeln, derart, dass ein hoher Pegel des von dem Invertierer 116 gelieferten Gleichspannungssignals mit einem hohen Pegel des Gleichstromsignals korrespondiert und ein niedriger Pegel des von dem Invertierer 116 gelieferten Gleichspannungssignals mit einem niedrigen Pegel des Gleichstromsignals korrespondiert. Die gesteuerte Stromsenke 118 ist als aktive Stromsenke ausgebildet und dazu eingerichtet, an ihrem Ausgang einen, bezogen auf die technische Stromrichtung, positiven eingehenden, d.h. negativen ausgehenden, elektrischen Stromfluss zu erzeugen, der in der vorstehend beschriebenen Weise von dem anliegenden Steuersignal abhängt.

Das von der gesteuerten Stromsenke 118 erzeugte Gleichstromsignal wird über den zweiten elektrischen Schaltpfad, d.h. über den Hinleiter 98b, den im sicheren Zustand des Schutzgeräts 24 geschlossenen Schalter 96b und den Rückleiter 100b, zu dem Stromrichtungselement 120 übertragen. Wie an dieser Stelle deutlich wird, beziehen sich die Bezeichnungen der Leiter 98b, 100b als "Hin"-leiter bzw. "Rück"-leiter nicht auf die technische Stromflussrichtung, sondern auf die Signalflussrichtung, die im Falle des Schalters 96b der technischen Stromflussrichtung entgegen gesetzt ist, da die Stromsenke 118 ein durch einen eingehenden Strom definiertes Stromsignal erzeugt und überträgt.

Das Stromrichtungselement 120 ist dazu ausgebildet, an seinem Ausgang ein von dem empfangenen Gleichstromsignal abhängiges Gleichspannungssignal auszugeben. Das Stromrichtungselement 120 erzeugt ein dem empfangenen Stromsignal entsprechendes Spannungssignal, so lange der Wert des über den zweiten Schaltpfad übertragenen, von dem Stromrichtungselement 120 empfangenen und durch einen ausgehenden Strom des Stromrichtungselements 120 definierten Stromsignals zwischen einem erwarteten niedrigen Pegel, z.B. 0 mA, und einem erwarteten hohen Pegel, z.B. 10 mA, wechselt. In diesem Fall erzeugt das Stromrichtungselement 120 bevorzugt an seinem Ausgang ein Gleichspannungssignal, welches dem an seinem Eingang empfangenen Stromsignal entspricht, d.h. dass ein hoher ausgehender Strompegel des Stromsignals mit einem hohen Spannungspegel des Spannungssignals korrespondiert und ein niedriger ausgehender Strompegel des Stromsignals mit einem niedrigen Pegel des Spannungssignals korrespondiert.

Das Stromrichtungselement 120 ist ferner dazu eingerichtet, zu erkennen, wenn - entgegen der Erwartung bei fehlerfreiem Betrieb - an dem Stromrichtungselement 120 ein eingehender Stromfluss vorliegt, und/oder zu erkennen, wenn zwar ein ausgehender Stromfluss an dem Stromrichtungselement 120 vorliegt, dessen Pegel aber zumindest für eine bestimmte Zeit keinem bei einem fehlerfreien Betrieb des Sicherheitsteilnehmers 22 erwarteten Pegel entspricht, d.h. vorliegend weder dem bei fehlerfreiem Betrieb erwarteten hohen Pegel noch dem bei fehlerfreiem Betrieb erwarteten niedrigen Pegel des über den zweiten elektrischen Schaltpfads übertragenen Stromsignals. Beispielsweise kann ein Fehler angenommen werden, wenn der Wert des ausgehenden Stroms an dem Stromrichtungselement 120 unter dem erwarteten hohen Pegel des Stromsignals von der Stromsenke 118 und über dem erwarteten niedrigen Pegel des Stromsignals von der Stromsenke 118 liegt. In den vorstehenden Fällen erzeugt das Stromrichtungselement 120 an seinem Ausgang vorzugsweise ein Spannungssignal, das zu einer Verletzung der Erwartungshaltung der Sicherheitssteuerung führt, ggf. in Zusammenwirken mit der nachstehend erläuterten Dynamikeinheit 122. Das Stromrichtungselement 120 erzeugt beispielsweise ein Spannungssignal mit einem Pegel, der dauerhaft bzw. zumindest für eine vollständige Testzyklusdauer, d.h. die Dauer von dem Beginn einer Testlücke bis zu dem Beginn der nächsten Testlücke des von der Sicherheitssteuerung erwarteten Testsignals, einen im Wesentlichen konstanten Wert annimmt.

Das Stromrichtungselement 120 kann als elektrische Last bzw. als passives elektrisches Element bzw. Bauteil ausgebildet sein. Das Stromrichtungselement 120 kann, wie in Fig. 4 und 5 gezeigt, eine Zenerdiode 121 umfassen, die in Richtung des aus dem Stromrichtungselement 120 ausgehenden Stroms gepolt ist, wobei die Zenerdiode 121 aber nicht unbedingt erforderlich ist. Die Zenerdiode 121 kann sich bei einem erwarteten hohen Pegel des aus dem Stromrichtungselement 120 ausgehenden Stromflusses in ihrem Durchlassbereich befinden, in der eine Spannung an der Zenerdiode 121 anliegt, die im Bereich einer Durchlassspannung der Zenerdiode 121 liegt, und kann sich bei einem demgegenüber verringerten aus dem Stromrichtungselement 120 ausgehenden Stromfluss in einem Sperrbereich befinden, in dem eine geringere als die Durchlassspannung an der Zenerdiode 121 anliegt.

Zusätzlich zu den vorstehenden Komponenten kann eine wie in Fig. 6 gezeigte Dynamikeinheit 122 vorgesehen sein, die an ihrem Eingang das von dem Stromrichtungselement 120 erzeugte Spannungssignal empfängt und dazu eingerichtet ist, das empfangene Signal im Wesentlichen unverändert weiterzuleiten, wenn das empfangene Signal die erwartete Dynamik aufweist, d.h. insbesondere regelmäßig auftretende Testlücken. Wenn das empfangene Signal nicht die erwartete Dynamik aufweist, gibt die Dynamikeinheit ein Signal mit einem im Wesentlichen konstanten Pegel aus. Die Dynamikeinheit bildet dabei sowohl einen konstant hohen Pegel ihres Eingangssignals als auch einen konstant niedrigen Pegel ihres Eingangssignals auf denselben, niedrigen oder hohen, Pegel ihres Ausgangssignals ab. Die einheitliche Abbildung sowohl eines konstant hohen Pegels als auch eines konstant niedrigen Pegels auf denselben Pegel führt zu einer Zustandsreduktion, die es erleichtert, an der Sicherheitssteuerung anhand des eingehenden Testsignals einen Abschaltfall, d.h. das Vorliegen eines nicht sicheren Zustands eines Sicherheitsteilnehmers, von einem Systemfehler zu unterscheiden.

Im Folgenden wird die Funktionsweise der Testschaltung 62 unter Bezugnahme auf die Fig. 6 und Fig. 7 erläutert, wobei Fig. 7 die Strom- und Spannungssignale zeigt, die auf den zwischen den Komponenten der Testschaltung 62 angeordneten Abschnitten des Testsignalpfads 36 bei fehlerfreier Funktion des Sicherheitsteilnehmers 22 und im sicheren Zustand des Schutzgeräts 24, in dem die beiden Schalter 96a, 96b geschlossen sind, jeweils vorhanden sind. Ganz oben in Fig. 7 ist das an dem Testsignaleingang 106 eingehende, auf der elektrischen Spannung U basierende Testsignal 80 gezeigt, wie es von der Sicherheitssteuerung 10 an dem Ausgang X1 bereitgestellt wird. Der Invertierer 110 erzeugt ein zu dem empfangenen Testsignal 80 invertiertes Spannungssignal U₁₁₀, d.h. ein wie in Fig. 7 gezeigtes Spannungssignal U₁₁₀ mit einem niedrigen Spannungspegel während des hohen Signalpegels des eingehenden Testsignals 80 und einem hohen Spannungspegel in der Form eines Testpulses während der Testlücke 82 des empfangenen Testsignals 80. Die gesteuerte Stromquelle 112 erzeugt daraus ein durch einen ausgehenden Strom i_{ausg} der Stromquelle 112 gebildetes Stromsignal I₁₁₂ mit einer zu dem Spannungssignal U₁₁₀ im Wesentlichen identischen Form, d.h. einem Strompuls mit einem hohen ausgehenden Strompegel während der Testlücke 82 des empfangenen Testsignals 80 und einem niedrigen Strompegel zwischen zwei Strompulsen.

Dieses Stromsignal I₁₁₂ wird zu dem Stromflusselement 114 übertragen, welches aus dem übertragenen Stromsignal I₁₁₂ ein Spannungssignal U₁₁₄ generiert, das in seiner Form mit dem von dem Invertierer 110 erzeugten Spannungssignal U₁₁₀ identisch ist. Das von dem Stromflusselement 114 erzeugte Spannungssignal U₁₁₄ wird durch den Invertierer 116 invertiert, so dass dieser an seinem Ausgang ein Spannungssignal U₁₁₆ bereitstellt und an die gesteuerte Stromsenke 118 übermittelt, welches in seiner Form mit dem an dem Testsignaleingang 106 empfangenen Testsignal 80 identisch ist. Die Stromsenke 118 erzeugt daraus ein durch einen eingehenden elektrischen Strom i_{eing} der Stromsenke 118 gebildetes Stromsignal I₁₁₈, das in seiner Form mit dem von dem Invertierer 116 gelieferten Spannungssignal U₁₁₆ identisch ist und über den Schalter 96b zu dem Stromrichtungselement 120 übertragen wird, welches daraus ein Spannungssignal U₁₂₀ erzeugt, das in seiner Form mit dem von der Stromsenke 118 gelieferten Stromsignal I₁₁₈ und folglich mit dem an dem Testsignaleingang 106 eingehenden Testsignal 80 identisch ist. Die Dynamikeinheit 122 leitet das Signal U₁₂₀ im Wesentlichen unverändert weiter, wenn das Signal U₁₂₀ die erwartete Dynamik aufweist. Andernfalls gibt die Dynamikeinheit 122 ein Signal mit einem im Wesentlichen konstanten Pegel aus. Das Ausgangssignal der Dynamikeinheit 122 wird an dem Testsignalausgang 108 des Sicherheitsteilnehmers 22 bereitgestellt.

Somit wird bei intaktem Sicherheitselement 22 und im sicheren Zustand des Schutzgeräts 24 an dem Testsignalausgang 108 ein Testsignal bereitgestellt, welches mit dem an dem Testsignaleingang 106 empfangenen Testsignal im Hinblick auf die von der Sicherheitssteuerung 10 überprüften Eigenschaften, insbesondere Signalform und Signalsynchronität, identisch ist, so dass die Erwartungshaltung der Sicherheitssteuerung erfüllt wird.

Wird zumindest einer der Schalter 96a, 96b des Schutzgeräts 24 bei dem Eintreten eines nicht sicheren Zustands des Schutzgeräts 24 geöffnet, wird das Stromflusselement 114 und/oder das Stromrichtungselement 116 nicht mehr durch das eingehende Testsignal 80 angeregt, was zu einem Verlust der Dynamik des an dem Ausgang 108 ausgegebenen Testsignals und somit zuverlässig zu einer Sicherheitsabschaltung durch die Sicherheitssteuerung führt. Dieselbe Wirkung hat eine Leitungsunterbrechung eines Hinleiters 98a, 98b oder Rückleiters 100a, 100b in der Anschaltungsleitung 30, so dass auch in diesem Fehlerfall zuverlässig eine Sicherheitsabschaltung erfolgt. Im Falle der Unterbrechung des Hinleiters 98a oder Rückleiters 100a liegt an dem Ausgang des Invertierers 116 dauerhaft ein hoher Pegel an, so dass eine permanente Ansteuerung der Stromsenke 118 erfolgt und somit ein dauerhafter eingehender Stromfluss am Ausgang der Stromsenke 118 ohne die erwartete Signaldynamik auftritt. Im Falle der Unterbrechung des Hinleiters 98b oder Rückleiters 100b wird an dem Stromrichtungselement 120 dauerhaft kein ausgehender Strom erzeugt, so dass dessen Ausgangssignal U₁₂₀ einen dauerhaft niedrigen Pegel ohne die erwartete Signaldynamik annimmt.

Zudem bewirkt die Testschaltung 62, dass auch ein Querschluss zwischen den beiden Schaltpfaden, d.h. ein Querschluss zwischen dem Hinleiter 98a und/oder Rückleiter 100a eines elektrischen Schaltpfades mit dem Hinleiter 98b und/oder Rückleiter 100b des anderen elektrischen Schaltpfades erkannt wird und zu einer Sicherheitsabschaltung führt. Im Falle eines solchen Querschlusses wird der zweite Schaltpfad unmittelbar mit der Stromquelle 112 verbunden, welche im Falle eines Signals mit einem hohen Pegel an ihrem Steuereingang einen ausgehenden Stromfluss antreibt. Die Stromquelle 112 wirkt somit einem ausgehenden Stromfluss an dem Stromrichtungselement 120 entgegen, so dass sich an dem Stromrichtungselement 120 zumindest zeitweise ein eingehender Stromfluss einstellt oder zumindest ein Stromfluss mit einem zumindest für eine bestimmte Zeit vorliegenden Pegel, der sich von dem bei fehlerfreiem Betrieb erwarteten Pegel des Stromsignals I₁₁₈ unterscheidet und beispielsweise unterhalb des erwarteten hohen Pegels und gleichzeitig oberhalb des erwarteten niedrigen Pegels von z.B. 0 mA liegt. Das Stromrichtungselement 120 ist dazu ausgebildet, eine solche Abweichung von dem fehlerfreien Betrieb anhand des Stromflusses durch das Stromrichtungselement 120 zu erkennen und in diesem Fall ein Spannungssignal U₁₂₀ an seinem Ausgang zu erzeugen, welches vorzugsweise einen dauerhaft konstanten Spannungspegel aufweist und welches zu einem die Erwartungshaltung der Sicherheitssteuerung verletzenden Testsignal an dem Testsignalausgang 108 führt. Somit wird auch dieser Fehlerfall, der aufgrund der parallelen Führung der Hinleiter 98a, 98b und Rückleiter 100a, 100b beider elektrischer Schaltpfade in einem gemeinsamen Anschaltungskabel 28 prinzipiell auftreten kann, zuverlässig erkannt und kann somit nicht zu einem Verlust der Sicherheitsfunktion führen.

Die Testschaltung 62 wird dabei allein durch das an dem Eingang 106 empfangene Testsignal angeregt und die Dynamik des an dem Ausgang 108 ausgegebenen Testsignals wird allein durch die Dynamik dieses eingehenden Testsignals erzeugt. Die Testschaltung 62 kommt dementsprechende vollständig ohne eigene Zeitbasis und insbesondere ohne einen eigenen Taktgeber aus und die hierin beschriebenen Bestandteile der Testschaltung 62 können sämtlich durch diskrete Bauteile gebildet sein, d.h. dass auf die Verwendung eines integrierten Schaltkreises wie z.B. eines Mikroprozessors verzichtet werden kann. Die Zuverlässigkeit und Fehlersicherheit der Testschaltung 62 wird dadurch erheblich gesteigert. Außerdem wird eine Verzögerung zwischen dem an dem Testsignaleingang 106 eingehenden Testsignal und dem an dem Testsignalausgang 108 ausgehenden Testsignal weitestgehend vermieden und die Ansprechzeit des Sicherheitssystems insgesamt optimiert.

In dem vorstehend beschriebenen Ausführungsbeispiel einer Testschaltung 62 bilden der Invertierer 110 und die nicht-invertierende gesteuerte Stromquelle 112 zusammen eine invertierende gesteuerte Stromquelle und der Invertierer 116 und die nicht-invertierende gesteuerte Stromsenke 118 bilden zusammen eine invertierende gesteuerte Stromsenke. Anstelle des Aufbaus dieser gesteuerten invertierenden Stromquelle bzw. -senke aus separaten Bauteilen, nämlich aus dem Invertierer 110, 116 und der gesteuerten nicht-invertierenden Stromquelle 112 bzw. -senke 118, könnte jeweils auch eine einteilige gesteuerte invertierende Stromquelle bzw. - senke eingesetzt werden, d.h. eine gesteuerte Stromquelle bzw. Stromsenke, die bei einem hohen Pegel des Steuersignals einen ausgehenden bzw. eingehenden Strom mit einem niedrigen Pegel erzeugt und die bei einem niedrigen Pegel des Steuersignals einen ausgehenden bzw. eingehenden Strom mit einem hohen Pegel erzeugt. Ebenso kann prinzipiell auf das Stromflusselement 114 verzichtet werden bzw. dessen Funktion in den Invertierer 116 oder eine invertierende gesteuerte Stromsenke integriert werden, indem ein stromgesteuerter Invertierer bzw. eine stromgesteuerte invertierende Stromsenke verwendet wird.

Die die Sicherheit erhöhende Funktionalität der vorstehend beschriebenen Testschaltung 62 kann auch erreicht werden, wenn Stromquelle 112 und Stromsenke 118 gegenüber der beschriebenen Ausführungsform vertauscht sind. An dem Stromrichtungselement 120 wird dann bei fehlerfreiem Betrieb ein eingehender Stromfluss erwartet, der durch die Stromquelle 112 erzeugt wird, so dass das Stromrichtungselement 120 bevorzugt dazu ausgebildet ist, einen Fehler daran zu erkennen, dass unerwarteter Weise ein ausgehender Stromfluss an dem Stromrichtungselement auftritt oder ein eingehender Stromfluss, der keinen bei fehlerfreiem Betrieb erwarteten Pegel aufweist. Die Stromsenke 118 ist dann bevorzugt so ausgebildet oder beschaltet, dass ein ausgehender Stromfluss aus der Stromsenke 118 verhindert wird. Dazu könnte beispielsweise eine der in Fig. 5 gezeigten, mit dem Ausgang der Stromquelle 112 verbundenen Diode 124 entsprechende Diode an dem Ausgang der Stromsenke 118 vorgesehen sein, welche eine der Darstellung in Fig. 5 entgegen gesetzte Polung besitzt.

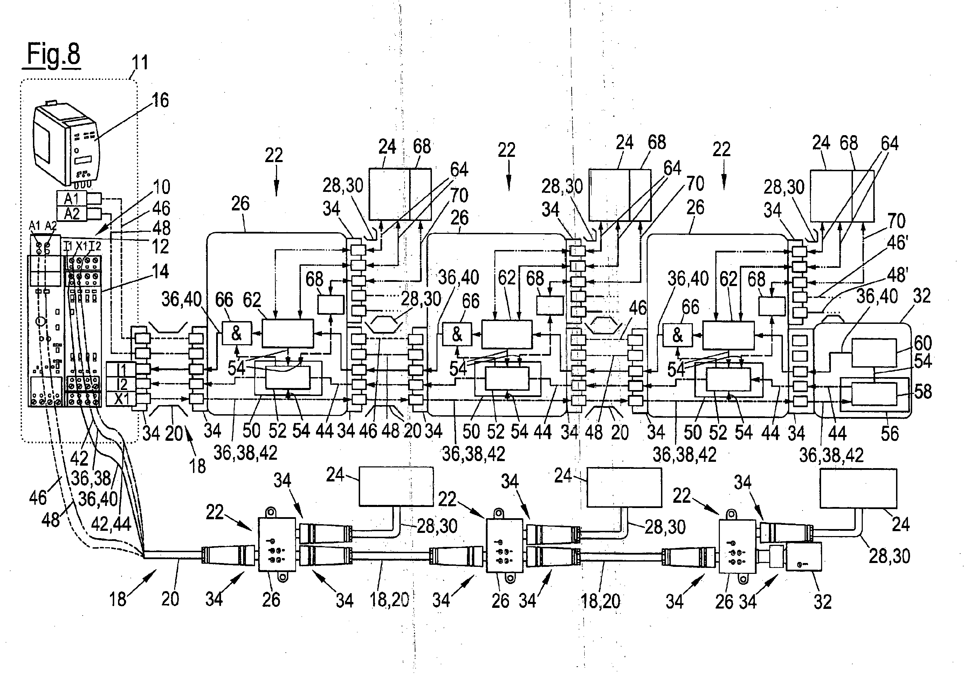

Fig. 8 zeigt ein Sicherheitssystem gemäß einer weiteren Ausführungsform der Erfindung, welche abgesehen von den nachstehend beschriebenen Unterschieden im Wesentlichen der in Fig. 1 gezeigten Ausführungsform entspricht und mehrere Sicherheitsteilnehmer 22 aufweist. Die obere Darstellung in Fig. 8 zeigt dabei eine schematische Ansicht und die untere Darstellung in Fig. 8 eine im Wesentlichen fotographische Ansicht desselben Sicherheitssystems. Sich in den beiden Darstellungen entsprechende Elemente tragen dieselben Bezugszeichen.

Das Sicherheitssystem umfasst eine Sicherheitssteuerung 10, die in einem Schaltschrank 11 angeordnet ist und ein Hauptmodul 12 und ein Ein-/Ausgangsmodul 14 umfasst, die über eine nicht dargestellte Busschiene miteinander verbunden sind, wobei das Ein-/Ausgangsmodul 14 einen Ausgang X1, einen Sicherheitseingang I1 sowie einen nicht sicheren Standardeingang I2 umfasst. In dem Schaltschrank 11 ist ferner eine als Schaltnetzteil ausgebildete Stromversorgungseinheit 16 zur Stromversorgung des Sicherheitssystems angeordnet, die ein Gleichspannungspotential bzw. eine konstante, auf Masse bezogene Spannung mit einem hohen Pegel von beispielsweise 24 Volt und ein Massepotential bzw. ein konstantes Gleichspannungspotential mit einem niedrigen Pegel von z.B. 0 Volt gegenüber Masse bereitstellt, wobei das Gleichspannungspotential mit dem hohen Pegel an einen Anschluss A1 des Hauptmoduls 12 und das Gleichspannungspotential mit dem niedrigen Pegel an einen Anschluss A2 des Hauptmoduls 12 geliefert wird.

Das Sicherheitssystem umfasst eine als Busleitung 18 ausgebildete Testsignalleitung mit mehreren als Buskabel 20 ausgebildeten Kabeln, wobei eines der Buskabel 20 an die Sicherheitssteuerung 10 angeschlossen ist. Das Sicherheitssystem umfasst ferner mehrere Sicherheitsteilnehmer 22, die über die Buskabel 20 in einer Linie hintereinander geschaltet und über die Busleitung 18 mit der Sicherheitssteuerung 10 verbunden sind. Am Ende der durch die Sicherheitsteilnehmer 22 gebildeten Linie befindet sich ein Abschlusselement 32, welches hier direkt, d.h. ohne ein zwischengeschaltetes Kabel, mit dem letzten Sicherheitsteilnehmer 22 der Linie verbunden ist. Prinzipiell könnte das Abschlusselement 32 aber auch durch ein weiteres Buskabel an die Busleitung 18 angeschlossen sein.

Die Schutzgeräte 24, Anschaltungsmodule 26 und das Abschlusselement 32 weisen jeweils ein eigenes Gehäuse auf, welches vorzugsweise nach der Gehäuseschutzart IP 67 oder IP 20 oder einer sonstigen gegen Schmutz oder Feuchtigkeit schützenden Gehäuseschutzart ausgebildet ist.

Die Busleitung 18 und die an die Busleitung 18 angeschlossenen Sicherheitsteilnehmer 22 bilden einen Testsignalpfad 36 mit einem mit dem Ausgang X1 der Sicherheitssteuerung 10 verbundenen Hinleitungspfad 38 und einem mit dem Sicherheitseingang I1 der Sicherheitssteuerung 10 verbundenen Rückleitungspfad 40, wobei der Hinleitungspfad 38 und der Rückleitungspfad 40 über das Abschlusselement 32 miteinander verbunden sind und sowohl der Hinleitungspfad 38 als auch der Rückleitungspfad 40 durch die Sicherheitsteilnehmer 22 hindurch verlaufen. Ferner bilden die Sicherheitsteilnehmer 22, die Busleitung 18 und das Abschlusselement 32 einen Datenpfad 42 aus, der einen durch den Hinleitungspfad 38 des Testsignalpfads 36 gebildeten, d.h. mit diesem identischen, Datenhinleitungspfad und einen separaten, an dem Eingang I2 der Sicherheitssteuerung 10 angeschlossenen Datenrückleitungspfad 44 umfasst, die zusammen eine Ringbusleitung bilden. Ferner sind eine über den Anschluss A1 des Hauptmoduls 12 geführte erste Stromversorgungsleitung 46 und eine über den Anschluss A2 des Hauptmoduls 12 geführte zweite Stromversorgungsleitung 48 vorgesehen, über die die Sicherheitssteuerung 10, die Sicherheitsteilnehmer 22 und das Abschlusselement 32 mit Strom versorgt werden. Wie in Fig. 8 am Beispiel des rechten Sicherheitsteilnehmers 22 bezeichnet, können die Anschaltungskabel 30 jeweils eine erste und zweite Stromversorgungsader 46', 48' umfassen, über die das jeweilige Schutzgerät 24 an die erste und zweite Stromversorgungsleitung 46, 48 anschließbar und dadurch mit Strom versorgbar ist.

Wie in Fig. 8 gezeigt, sind der Testsignalpfad 36, der Datenpfad 42, die erste Stromversorgungsleitung 46 und die zweite Stromversorgungsleitung 48 in der gemeinsamen Busleitung 18 angeordnet und werden alle in denselben gemeinsamen Buskabeln 20 der Busleitung 18 geführt. Die Buskabel 20 weisen dabei jeweils eine elektrisch leitfähige Ader für den Hinleitungspfad 38 des Testsignalpfads 36, der gleichzeitig den Datenhinleitungspfad darstellt, für den Datenrückleitungspfad 44, für die erste Stromversorgungsleitung 46 und für die zweite Stromversorgungsleitung 48 auf, so dass die gesamte Verkabelung der Sicherheitsteilnehmer 22 mit der Sicherheitssteuerung 10 durch eine linienförmige Busleitung 18 aus Buskabeln 20 mit jeweils mindestens fünf Adern realisiert ist. Es ist somit nur genau ein Buskabel 20 erforderlich, um zwei benachbarte Sicherheitsteilnehmer 22 miteinander bzw. mit der Sicherheitssteuerung 10 zu verbinden.

Von der Sicherheitssteuerung 10 wird ein Ausgangssignal erzeugt und über den Ausgang X1 an den Hinleitungspfad 38 ausgesendet. Dieses Ausgangssignal wird in den Anschaltungsmodulen 26 der Sicherheitsteilnehmer 22, wie in Fig. 8 ersichtlich, direkt und ohne Unterbrechungsmöglichkeit im Wesentlichen unverändert durchgeschleift und im Wesentlichen unverändert bis zu dem Abschlusselement 32 übertragen. Gleichzeitig ist in den Anschaltungsmodulen 26 jeweils eine Auswerteeinheit 50 mit einem Mikroprozessor 52 vorgesehen. Die Auswerteeinheit 50 mit dem Mikroprozessor 52, die die hierin beschriebene Diskrepanzüberprüfung durchführt und den Unterbrechungsschalter 66 ansteuert, erfüllt in diesem Ausführungsbeispiel noch weitere Funktionen und kann in diesem Zusammenhang auch als Logikeinheit bezeichnet werden. Die Auswerteeinheit 50 ist über einen Signalpfad 54 mit dem Hinleitungspfad 38 verbunden und dazu eingerichtet, das auf dem Hinleitungspfad 38 übertragene Ausgangssignal zu überwachen, beispielsweise zum Zweck einer Synchronisierung.

Das von der Sicherheitssteuerung erzeugte, über den Hinleitungspfad 38 ausgesendete Ausgangssignal basiert vorzugsweise auf der elektrischen Spannung und weist mit einer vorgegebenen Zykluszeit periodisch auftretende Synchronisationsmerkmale und zwischen den Synchronisationsmerkmalen angeordnete Datenmerkmale auf, die jeweils ein Datenbit der von der Sicherheitssteuerung 10 gesendeten Ausgangsdaten repräsentieren.

Das Abschlusselement 32 ist dazu eingerichtet, das Ausgangssignal von dem Hinleitungspfad 38 zu empfangen und in Abhängigkeit von dem von dem Hinleitungspfad 38 empfangenen Ausgangssignal ein gegenüber dem empfangenen Ausgangssignal verändertes Testsignal an den Rückleitungspfad 40 des Testsignalpfads 36 auszusenden. Das über den Rückleitungspfad 40 übertragene Testsignal unterscheidet sich somit von dem von der Sicherheitssteuerung 10 ausgesendeten Ausgangssignal. Das Abschlusselement 32 weist dazu ebenfalls eine mit dem Hinleitungspfad 38 verbundene Logikeinheit 56 mit einem Mikroprozessor 58 auf, die das über den Hinleitungspfad 38 übertragene Ausgangssignal empfängt und auswertet. Die Logikeinheit 56 ist mit einem Testsignalgenerator 60 des Abschlusselements 32 verbunden und steuert diesen an, um aktiv ein Testsignal zu generieren und an den mit dem Testsignalgenerator 60 verbundenen Rückleitungspfad 40 des Testsignalpfads 36 signaltreibend auszusenden.

Der Rückleitungspfad 40 des Testsignalpfads 36 verläuft durch die Sicherheitsteilnehmer 22 hindurch. Diese sind dazu eingerichtet, den Rückleitungspfad 40 bei Vorliegen bzw. Eintreten eines nicht sicheren Zustands ihres jeweiligen Schutzgeräts 24 zu unterbrechen. Die Anschaltungsmodule 26 weisen jeweils eine z.B. wie vorstehend beschrieben ausgebildete Testschaltung 62 auf, die wie beschrieben über Verbindungen 64 der Anschaltungsleitung 30 mit in der Regel zwei Schutzkanälen des jeweiligen Schutzgeräts 24 verbunden ist, wobei die Testschaltung 62 in Zusammenwirken mit den Schutzkanälen des Schutzgeräts 24 eine Unterbrechung des Rückleitungspfads 40 des Testsignalpfads 36 bewirkt.

Die Logikeinheiten 56, 50 des Abschlusselements 32 und der Anschaltungsmodule 26 sind jeweils in dem Datenpfad 42 bzw. Datenrückleitungspfad 44 angeordnet und dazu eingerichtet, Daten über den Datenpfad 42 zu empfangen und an den Datenrückleitungspfad 44 zu senden. Die von einem Sicherheitsteilnehmer 22 erzeugten und über den Datenrückleitungspfad 44 gesendeten Daten umfassen vorzugsweise von dem jeweiligen Sicherheitsteilnehmer 22 erzeugte Diagnose- und/oder Statusinformationen. Insbesondere können diese Informationen den sicherheitsrelevanten Schaltzustand des jeweiligen Schutzgeräts 24 wiedergeben, der auch für die Unterbrechung des Testsignalpfads ausschlaggebend ist, d.h. den von dem Schutzgerät 24 eingenommenen Zustand sicher oder nicht sicher. Dadurch wird es der Sicherheitssteuerung 10 ermöglicht, im Fall einer Auslösung einer Sicherheitsabschaltung festzustellen, durch welchen Sicherheitsteilnehmer 22 die Abschaltung verursacht wurde. Auch können die von einem Sicherheitsteilnehmer 22 an die Sicherheitssteuerung übertragenen Daten einen aufgetretenen Diskrepanzfehler und vorzugsweise den fehlerhaften Sicherheitsteilnehmer 22 identifizieren.

Die Anschaltungsmodule 26 weisen jeweils eine über einen Signalpfad 54 mit der Logikeinheit 50 verbundene, insbesondere binäre, Ein-/Ausgabeschrittstelle 68 auf, die über wenigstens eine in der Anschaltungsleitung 30 vorgesehene Signalader 70 mit einer, insbesondere binären und/oder nicht sicheren Ein-/Ausgabe-Schnittstelle 68 des Schutzgeräts 24 verbunden ist, um über den Datenrückleitungspfad 44 empfangene Daten an das Schutzgerät 24 zu übertragen und/oder um von dem Schutzgerät 24 erzeugte Ausgangsdaten über den Datenrückleitungspfad 44 an die Sicherheitssteuerung 10 zu senden.

Die Sicherheitssteuerung 10 ist dazu eingerichtet, das über den Rückleitungspfad 40 des Testsignalpfads 36 übertragene Signal zu empfangen und mit einer in der Sicherheitssteuerung 10 konfigurierten Erwartungshaltung zu vergleichen. Da sich das bei dem Betrieb des Sicherheitssystems über den Rückleitungspfad 40 übertragene Testsignal von dem über den Hinleitungspfad 38 übertragenen Ausgangssignal unterscheidet und nur das Testsignal der Erwartungshaltung der Sicherheitssteuerung 10 entspricht, führt z.B. ein Querschluss zwischen dem Hinleitungspfad 38 und dem Rückleitungspfad 40 des Testsignalpfads 36 zu einem Ausbleiben des erwarteten Signals an dem Sicherheitseingang I1. Ein solcher Funktionsfehler, wie er beispielsweise bei einer Quetschung eines Buskabels 20 auftreten kann, führt folglich zuverlässig zu einer Verletzung der Erwartungshaltung der Sicherheitssteuerung und zu einer Sicherheitsabschaltung, so dass eine Tolerierung eines solchen Fehlerzustands durch die Sicherheitsteuerung 10 ausgeschlossen ist.

Der Hinleitungspfad 38 des Testsignalpfads 36 bildet mit dem Datenrückleitungspfad 44 einen als Ringbus ausgebildeten ringförmigen Datenpfad 42, über den die Sicherheitssteuerung 10, das Abschlusselement 32 und die Sicherheitsteilnehmer 22 miteinander kommunizieren und zwar nach Art einer nachstehend beschriebenen Daisy-Chain-Buskommunikation, insbesondere nach dem Master-Slave-Prinzip. Die Sicherheitssteuerung 10, das Abschlusselement 32 und die Sicherheitsteilnehmer 22 bilden dabei die Teilnehmer der Buskommunikation, wobei die Sicherheitssteuerung 10 gleichzeitig den Busmaster darstellt.

Um Daten von dem Datenpfad 42 zu empfangen und Daten über den Datenpfad 42 zu senden, ist jeder Teilnehmer 22, 32 dazu ausgebildet, an einem Eingang ein über den Datenpfad 42 übertragenes eingehendes Datensignal zu empfangen, die empfangenen Daten zu verarbeiten, und bevorzugt gleichzeitig an einem von dem Eingang verschiedenen Ausgang ein ausgehendes Datensignal an den Datenpfad 42 auszusenden, so dass die Teilnehmer 22, 32 eine Nachrichtenkette bilden, in der die Daten in einer vorgegebenen Datenflussrichtung von einem Teilnehmer 22, 32 zum nächsten übertragen werden. Die Logikeinheiten 50, 56 der Sicherheitsteilnehmer 22 und des Abschlusselements 32 dienen dabei als Sende- und Empfangsschaltung, über die der jeweilige Teilnehmer 22, 32 Daten empfängt und sendet.

Anstelle der Sicherheitssteuerung 10 könnte in dem Ausführungsbeispiel auch eine andere geeignete Sicherheitseinheit eingesetzt werden.

### Bezugszeichenliste

- 10: Sicherheitseinheit, Sicherheitssteuerung
- 11: Schaltschrank
- 12: Hauptmodul
- 14: Ein-/Ausgangsmodul
- 16: Stromversorgungseinheit
- 18: Busleitung, Testsignalleitung
- 20: Kabel, Buskabel
- 22: Sicherheitsteilnehmer
- 24: Schutzgerät
- 26: Anschältüngsmödul
- 28: Anschaltungskabel
- 30: Anschaltungsleitung
- 32: Abschlusselement
- 34: Steckverbindung
- 36, 36': Testsignalpfad
- 38, 38': Hinleitungspfad, Datenhinleitungspfad
- 40, 40': Rückleitungspfad des Testsignalpfads
- 42: Datenpfad
- 44: Datenrückleitungspfad
- 46: erste Stromversorgungsleitung
- 46': erste Stromversorgungsader
- 48: zweite Stromversorgungsleitung
- 48': zweite Stromversorgungsader
- 50: Auswerteeinheit, Logikeinheit
- 52: Mikroprozessor
- 54: Signalpfad
- 56: Logikeinheit
- 58: Mikroprozessor
- 60: Testsignalgenerator
- 62: Testschaltung
- 64: Verbindung
- 66, 66': Unterbrechungsschalter
- 68: Ein-/Ausgabeschnittstelle
- 70: Signalader
- 80: Testsignal
- 82: Testlücke
- 96a, 96b: Schalter
- 98, 98a, 98b: Hinleiter
- 100, 100a, 100b: Rückleiter
- 105a, 105b: Schalter
- 106: Testsignaleingang
- 108: Testsignalausgang
- 110: Invertierer
- 112: gesteuerte Stromquelle
- 114: Stromflusselement
- 116: Invertierer
- 118: gesteuerte Stromsenke
- 120: Stromrichtungselement
- 121: Zenerdiode
- 122: Dynamikeinheit
- 124: Diode
- 125: Signalverstärker
- A1: Gleichspannungsanschluss
- A2: Masseanschluß
- i_{eing}: eingehender elektrischer Strom
- i_{ausg}: ausgehender elektrischer Strom
- I₁₁₂, I₁₁₈: Stromsignal
- II, II': Sicherheitseingang
- I2: Eingang
- U: elektrische Spannung
- U₁₁₀, U₁₁₄: Spannungssignal
- U₁₁₆, U₁₂₀: Spannungssignal
- X1, X1': Ausgang

## Patentansprüche

1. Sicherheitssystem umfassend
- eine Sicherheitseinheit (10), insbesondere Sicherheitssteuerung,
- wenigstens einen Sicherheitsteilnehmer (22), der ein Schutzgerät (24) umfasst und einen ersten und einen zweiten unterbrechbaren Signalübertragungspfad, die bei dem Eintreten eines nicht sicheren Zustands des Schutzgeräts (24) gemeinsam unterbrechbar sind,
- wenigstens einen Testsignalpfad (36), der ausgehend von einem Ausgang (X1) der Sicherheitseinheit (10) durch den wenigstens einen Sicherheitsteilnehmer (22) hindurch zu einem Sicherheitseingang (I1) der Sicherheitseinheit (10) verläuft und wenigstens einen des ersten und zweiten unterbrechbaren Signalübertragungspfades umfasst,
wobei der Sicherheitsteilnehmer (22) eine Auswerteeinheit (50) umfasst, die mit dem ersten Signalübertragungspfad und/oder mit einem die Unterbrechung des ersten Signalübertragungspfads steuernden ersten Schaltsignalausgang des Schutzgeräts (24) verbunden ist, die mit dem zweiten Signalübertragungspfad und/oder mit einem die Unterbrechung des ersten Signalübertragungspfads steuernden zweiten Schaltsignalausgang des Schutzgeräts (24) verbunden ist und die dazu eingerichtet ist, zu überprüfen, ob der erste und zweite Signalübertragungspfad gemeinsam unterbrochen oder zur Unterbrechung angesteuert werden,
**dadurch gekennzeichnet,**
**dass** die zwei unterbrechbaren Signalübertragungspfade des Sicherheitsteilnehmers (22) in dem Testsignalpfad (36) elektrisch miteinander in Serie geschaltet sind,
**dass** der Sicherheitsteilnehmer (22) einen in dem Testsignalpfad (36) angeordneten und mit dem ersten und zweiten Signalübertragungspfad elektrisch in Serie geschalteten Unterbrechungsschalter (66) umfasst,
und **dass** die Auswerteeinheit (50) dazu eingerichtet ist, den Unterbrechungsschalter (66) zu öffnen, wenn der erste und zweite unterbrechbare Signalübertragungspfad nicht gemeinsam unterbrochen oder zur Unterbrechung angesteuert werden.

2. Sicherheitssystem nach Anspruch 1,
**dadurch gekennzeichnet, dass** wenigstens einer der unterbrechbaren Signalübertragungspfade des Sicherheitsteilnehmers mit einem in dem Testsignalpfad (36) angeordneten unterbrechbaren Signalübertragungspfad eines weiteren Sicherheitsteilnehmers (22) des Sicherheitssystems elektrisch in Serie geschaltet ist.

3. Sicherheitssystem nach zumindest einem der vorstehenden Ansprüche,
**dadurch gekennzeichnet, dass**
die Auswerteeinheit (50) dazu ausgebildet ist, zu überprüfen, ob die zwei Signalübertragungspfade bis auf eine vorgegebene Diskrepanzzeit gleichzeitig unterbrochen oder zur Unterbrechung angesteuert werden und/oder dass
die Auswerteeinheit (50) dazu ausgebildet ist, zu überprüfen, ob die zwei Signalübertragungspfade des Schutzgeräts (24) bis auf eine vorgegebene Diskrepanzzeit gleichzeitig geschlossen oder zum Schließen angesteuert werden.

4. Sicherheitssystem nach zumindest einem der vorstehenden Ansprüche,
**dadurch gekennzeichnet, dass**
der erste und/oder der zweite unterbrechbare Signalübertragungspfad einen elektrischen Schaltpfad mit einem elektrischen oder elektronischen Schalter (96a, 96b, 105a, 105b) oder einen unterbrechbaren optischen Signalübertragungspfad umfasst.

5. Sicherheitssystem nach zumindest einem der vorstehenden Ansprüche,
**dadurch gekennzeichnet, dass**
die Auswerteeinheit (50) des Sicherheitsteilnehmers (22) dazu eingerichtet ist, nach dem Öffnen des Unterbrechungsschalters (66) den Unterbrechungsschalter (66) erst nach einer Fehlerquittierung wieder zu schließen.

6. Sicherheitssystem nach zumindest einem der vorstehenden Ansprüche,
**dadurch gekennzeichnet, dass**
die Fehlerquittierung durch eine an dem Sicherheitsteilnehmer (22) vorgenommene Benutzereingabe durchführbar ist und/oder dass die Auswerteeinheit (50) dazu eingerichtet ist, zu überwachen, ob an dem Sicherheitsteilnehmer (22) eine vollständige ordnungsgemäße Schaltsequenz des ersten und zweiten unterbrechbaren Signalübertragungspfads auftritt, und den Fehler in diesem Fall zu quittieren.

7. Sicherheitssystem nach zumindest einem der vorstehenden Ansprüche,
**dadurch gekennzeichnet, dass** der Sicherheitsteilnehmer (22) eine Benachrichtigungseinheit umfasst, die dazu ausgebildet ist, in Abhängigkeit von der durch die Auswerteeinheit durchgeführten Überprüfung, ob die zwei Signalübertragungspfade gemeinsam unterbrochen oder zur Unterbrechung angesteuert werden, eine von einem Benutzer wahrnehmbare Benachrichtigung an dem Sicherheitsteilnehmer (22) zu erzeugen.

8. Sicherheitssystem nach zumindest einem der vorstehenden Ansprüche,
**dadurch gekennzeichnet, dass**
der Sicherheitsteilnehmer (22) dazu eingerichtet ist eine Datennachricht an die Sicherheitseinheit (10) zu senden, wenn durch die Auswerteeinheit (50) erkannt wird, dass die zwei Signalübertragungspfade aufgrund eines Fehlers nicht gemeinsam unterbrochen oder zur Unterbrechung angesteuert werden wobei die Sicherheitseinheit (10) dazu eingerichtet ist, anhand der Datennachricht den Fehler und/oder den fehlerhaften Sicherheitsteilnehmer (22) zu identifizieren.

9. Sicherheitssystem nach zumindest einem der vorstehenden Ansprüche,
**dadurch gekennzeichnet, dass** der Sicherheitsteilnehmer (22) ein mit dem Schutzgerät (24) des Sicherheitsteilnehmers verbundenes Anschaltungsmodul (26) umfasst, über das der Sicherheitsteilnehmer (22) in das Sicherheitssystem eingebunden ist.

10. Sicherheitssystem nach Anspruch 9,
**dadurch gekennzeichnet, dass** der erste und/oder zweite unterbrechbare Signalübertragungspfad des Sicherheitsteilnehmers (22) einen in dem Schutzgerät (24) angeordneten Schalter (96a, 96b) umfasst, der über einen Hinleiter (98a, 98b) und einen Rückleiter (100a, 100b) in den Testsignalpfad (36) eingebunden ist, wobei der Hinleiter (98a, 98b) und der Rückleiter (100a, 100b) in einer das Schutzgerät (24) und das Anschaltungsmodul (26) verbindenden Anschaltungsleitung (28) angeordnet sind, und/oder dass
der erste und/oder zweite unterbrechbare Signalübertragungspfad des Sicher (22) einen in dem Anschaltungsmodul (26) angeordneten Schalter (105a, 105b) umfasst, der über eine Schaltsignalleitung mit einem die Unterbrechung des Schalters (105a, 105b) steuernden Schaltsignalausgang des Schutzgeräts (24) verbunden ist, wobei die Schaltsignalleitung in einer das Schutzgerät (24) und das Anschaltungsmodul (26) verbindenden Anschaltungsleitung (28) angeordnet ist.

11. Sicherheitssystem nach Anspruch 9 oder 10,
**dadurch gekennzeichnet, dass** das Anschaltungsmodul (26) einen Testsignaleingang (106) für ein eingehendes Testsignal und einen Testsignalausgang (108) für ein ausgehendes Testsignal umfasst, wobei das Schutzgerät (24) über eine Anschaltungsleitung (28) mit dem Anschaltungsmodul (26) verbunden ist und zwei Schalter (96a, 96b) umfasst, die jeweils über einen Hinleiter (98a, 98b) und einen Rückleiter (100a, 100b) der Anschaltungsleitung (28) zur Bildung des ersten und des zweiten unterbrechbaren Signalübertragungspfades mit dem Anschaltungsmodul (26) verbunden sind,
wobei das Anschaltungsmodul (26) eine Testschaltung (62) für die beiden Signalübertragungspfade umfasst, welche eine gesteuerte Stromquelle (112), eine gesteuerte Stromsenke (118) und ein Stromrichtungselement (120) umfasst,
wobei der Testsignaleingang (106) des Anschaltungsmoduls (26) mit einem Steuereingang der gesteuerten Stromquelle (112) oder der gesteuerten Stromsenke (118) verbunden ist, so dass die gesteuerte Stromquelle (112) oder Stromsenke (118) durch das eingehende Testsignal (80) oder ein davon abgeleitetes Signal (U₁₁₀) ansteuerbar ist und wobei ein gesteuerter Ausgang derselben von Stromquelle (112) und Stromsenke (118) mit dem Hinleiter (96a) des ersten Schaltpfades verbunden ist, um einen Strom über den ersten Schaltpfad zu übertragen,
wobei ein Steuereingang der jeweils anderen der gesteuerten Stromquelle (112) und der gesteuerten Stromsenke (118) mit dem Rückleiter (100a) des ersten Signalübertragungspfades verbunden ist, so dass die gesteuerte Stromquelle (112) oder Stromsenke (118) durch das über den ersten Signalübertragungspfad übertragene Stromsignal (I₁₁₂) oder ein davon abgeleitetes Signal (U₁₁₆) ansteuerbar ist, wobei ein gesteuerter Ausgang der anderen der gesteuerten Stromquelle (112) und Stromsenke (118) mit dem Hinleiter (98b) des zweiten Schaltpfads verbunden ist, um einen Strom über den zweiten Schaltpfad zu übertragen,
wobei der Rückleiter (100b) des zweiten Schaltpfades mit dem Stromrichtungselement (120) verbunden ist, welches dazu ausgebildet ist, ein von dem über den zweiten Schaltpfad übertragenen Strom abhängiges Signal (U₁₂₀) zu liefern, und
wobei der Testsignalausgang (108) des Anschaltungsmoduls (26) mit dem Stromrichtungselement (120) verbunden ist, um das von dem Stromrichtungselement (120) erzeugte Signal (U₁₂₀) oder ein davon abgeleitetes Signal als ausgehendes Testsignal des Sicherheitsteilnehmers (22) auszugeben.

12. Sicherheitssystem nach zumindest einem der vorstehenden Ansprüche,
**dadurch gekennzeichnet, dass** der Testsignalpfad (36) zumindest bereichsweise in einer Busleitung (18) angeordnet ist und das Sicherheitssystem wenigstens einen weiteren an die Busleitung (18) angeschlossenen Sicherheitsteilnehmer (22) umfasst, der ein Schutzgerät (24) umfasst, wobei die Sicherheitsteilnehmer (22) mit der Busleitung (18) den Testsignalpfad (36) bilden, wobei der Testsignalpfad (36) einen mit dem Ausgang (X1) der Sicherheitseinheit (10) verbundenen Hinleitungspfad (38) und einen mit dem Sicherheitseingang (I1) der Sicherheitseinheit (10) verbundenen Rückleitungspfad (40) aufweist,
wobei die Sicherheitsteilnehmer (22) entlang der Busleitung (18) so in einer Linie angeordnet sind, dass sowohl der Hinleitungspfad (38) als auch der Rückleitungspfad (40) des Testsignalpfads (36) durch dieselben Sicherheitsteilnehmer (22) hindurch verlaufen und wobei die Sicherheitsteilnehmer (22) derart eingerichtet sind, dass das Vorliegen eines nicht sicheren Zustands ihres Schutzgeräts (24) eine Unterbrechung des Testsignalpfads (36) bewirkt, und
wobei das Sicherheitssystem ferner ein an dem Ende der Linie angeschlossenes, den Hinleitungspfad (38) und den Rückleitungspfad (40) des Testsignalpfads (36) verbindendes Abschlusselement (32) umfasst,
wobei die Sicherheitseinheit (10) dazu ausgebildet ist, an ihrem mit dem Hinleitungspfad (38) verbundenen Ausgang (X1) ein Ausgangssignal auszusenden, und
wobei das Abschlusselement (32) dazu ausgebildet ist, das Ausgangssignal von dem Hinleitungspfad (38) zu empfangen und in Abhängigkeit von dem von dem Hinleitungspfad (38) empfangenen Ausgangssignal ein gegenüber dem empfangenen Ausgangssignal verändertes Testsignal an den Rückleitungspfad des Testsignalpfads auszugeben.

13. Sicherheitsteilnehmer (22) zur Verwendung in einem Sicherheitssystem nach zumindest einem der vorstehenden Ansprüche, umfassend
- ein Schutzgerät (24),
- einen ersten und einen unterbrechbaren Signalübertragungspfad, die bei dem Eintreten eines nicht sicheren Zustands des Schutzgeräts (24) gemeinsam unterbrechbar sind,
- wenigstens einen Testsignalpfad (36), der wenigstens einen des ersten und zweiten unterbrechbaren Signalübertragungspfades umfasst und der zwischen einem Testsignaleingang non (106) und einem Testsignalausgang (108) des Sicherheitsteilnehmers (22) angeordnet ist, und
- eine Auswerteeinheit (50),
wobei die Auswerteeinheit (50) mit dem ersten Signalübertragungspfad und/oder einem die Unterbrechung des ersten Signalübertragungspfads steuernden ersten Schaltsignalausgang des Schutzgeräts (24) verbunden ist, wobei die Auswerteeinheit (50) mit dem zweiten Signalübertragungspfad und/oder einem die Unterbrechung des ersten Signalübertragungspfads steuernden zweiten Schaltsignalausgang des Schutzgeräts (24) verbunden ist und wobei die Auswerteeinheit (50) dazu eingerichtet ist, zu überprüfen, ob der erste und zweite Signalübertragungspfad gemeinsam unterbrochen oder zur Unterbrechung angesteuert werden,
**dadurch gekennzeichnet,**
**dass** die zwei unterbrechbaren Signalübertragungspfade des Sicherheitsteilnehmers (22) in dem Testsignalpfad (36) elektrisch miteinander in Serie geschaltet sind,
**dass** der Sicherheitsteilnehmer einen in dem Testsignalpfad (36) angeordneten und mit dem ersten und zweiten Signalübertragungspfad elektrisch in Serie geschalteten Unterbrechungsschalter (66) umfasst
und **dass** die Auswerteeinheit (50) dazu eingerichtet ist, den Unterbrechungsschalter (66) zu öffnen, wenn der erste und zweite unterbrechbare Signalübertragungspfad nicht gemeinsam unterbrochen oder zur Unterbrechung angesteuert werden.

14. Anschaltungsmodul (26) für einen Sicherheitsteilnehmer zur Verwendung in einem Sicherheitssystem nach zumindest einem der Ansprüche 1 bis 12,
umfassend
- einen unterbrechbaren und/oder unterbrochenen Testsignalpfad (36), der zwischen einem Testsignaleingang (106) und einem Testsignalausgang (108) des Anschaltungsmoduls (26) angeordnet ist,
- zwei Anschlüsse, wobei ein Anschluss jeweils entweder zur seriellen Einbindung eines unterbrechbaren Signalübertragungspfads (96a, 96b) eines Schutzgeräts (24) in den Testsignalpfad (36) ausgebildet ist oder zur Verbindung mit einer mit einem Schaltsignalausgang eines Schutzgeräts (24) verbindbaren Schaltsignalleitung ausgebildet und mit einem Steuereingang eines in dem Testsignalpfad (36) angeordneten unterbrechbaren Signalübertragungspfads (105a, 105b) des Anschaltungsmoduls (26) verbunden ist, so dass der unterbrechbare Signalübertragungspfad (105a, 105b) abhängig von einem an dem Anschluss eingehenden Schaltsignal unterbrechbar ist, und
- eine Auswerteeinheit (50), die mit den beiden Anschlüssen verbunden ist und die dazu eingerichtet ist, bei der Verwendung des Anschaltungsmoduls (26) in dem Sicherheitssystem zu überprüfen, ob die über die beiden Anschlüsse jeweils in den Testsignalpfad (36) eingebundenen oder durch einen mit dem Anschluss verbundenen Schaltsignalausgang ansteuerbaren unterbrechbaren Signalübertragungspfade (96a, 96b, 105a, 105b) gemeinsam unterbrochen oder zur Unterbrechung angesteuert werden,
**dadurch gekennzeichnet,**
**dass** die zwei über die beiden Anschlüsse in den Testsignalpfad (36) eingebundenen oder durch einen mit dem Anschluss verbundenen Schaltsignalausgang ansteuerbaren unterbrechbaren Signalübertragungspfade (96a, 96b, 105a, 105b) in dem Testsignalpfad (36) elektrisch miteinander in Serie geschaltet sind, dass das Anschaltungsmodul einen in dem Testsignalpfad (36) an
- geordneten und mit dem ersten und zweiten Signalübertragungspfad elektrisch in Serie geschalteten Unterbrechungsschalter (66) umfasst
und **dass** die Auswerteeinheit (50) dazu eingerichtet ist, den Unterbrechungsschalter (66) zu öffnen, wenn die unterbrechbaren Signalübertragungspfade (96a, 96b, 105a, 105b) nicht gemeinsam unterbrochen oder zur Unterbrechung angesteuert werden.

## Claims

1. A safety system comprising
- a safety unit (10), in particular a safety control;
- at least one safety related participant (22) which comprises a protective device (24) and a first interruptible signal transmission path and a second interruptible signal transmission path which can be interrupted together on the occurrence of a non-secure state of the protective device (24);
- at least one test signal path (36) which starting from an output (X1) of the safety unit (10) runs through the at least one safety related participant (22) to a safety input (I1) of the safety unit (10) and which comprises at least one of the first and the second interruptible signal transmission paths,
wherein the safety related participant (22) comprises an evaluation unit (50) which is connected to the first signal transmission path and/or to a first switching signal output of the protective device (24) controlling the interruption of the first signal transmission path, which evaluation unit is connected to the second signal transmission path and/or to a second switching signal output of the protective device (24) controlling the interruption of the first signal transmission path and which evaluation unit is configured to check whether the first and the second signal transmission paths together are interrupted or are controlled for interruption,
**characterized in that**
the two interruptible signal transmission paths of the safety related participant (22) are electrically connected in series to one another in the test signal path (36),
**in that** the safety related participant (22) comprises an interruption switch (66) arranged in the test signal path (36) and electrically connected in series to the first and the second signal transmission paths,
and **in that** the evaluation unit (50) is configured to open the interruption switch (66) when the first and the second interruptible signal transmission paths together are not interrupted or controlled for interruption.

2. A safety system in accordance with claim 1,
**characterized in that**
at least one of the interruptible signal transmission paths of the safety related participant is electrically connected in series to an interruptible signal transmission path of a further safety related participant (22) of the safety system arranged in the test signal path (36).

3. A safety system in accordance with at least one of the preceding claims,
**characterized in that**
the evaluation unit (50) is configured to check whether the two signal transmission paths are simultaneously interrupted or controlled for interruption apart from a predefined discrepancy time; and/or **in that**
the evaluation unit (50) is configured to check whether the two signal transmission paths of the protective device (24) are simultaneously closed or controlled for closure apart from a predefined discrepancy time.

4. A safety system in accordance with at least one of the preceding claims,
**characterized in that**
the first and/or the second interruptible signal transmission path comprise(s) an electric switching path having an electric or electronic switch (96a, 96b, 105a, 105b) or an interruptible optical signal transmission path.

5. A safety system in accordance with at least one of the preceding claims,
**characterized in that**
the evaluation unit (50) of the safety related participant (22) is adapted to close the interruption switch (66) again only after an error acknowledgement following the opening of the interruption switch (66).

6. A safety system in accordance with at least one of the preceding claims,
**characterized in that**
the error acknowledgement can be carried out at the safety related participant through a user input at the safety related participant (22); and/or **in that**
the evaluation unit (50) is adapted to monitor whether a complete orderly switching sequence of the first and the second interruptible signal transmission paths arises at the safety related participant (22) and to acknowledge the error in this case.

7. A safety system in accordance with at least one of the preceding claims,
**characterized in that**
the safety related participant (22) comprises a notification unit which is configured to generate a notification perceivable by a user at the safety related participant (22) in dependence on the check carried out by the evaluation unit of whether the two signal transmission paths together are interrupted or controlled for interruption.

8. A safety system in accordance with at least one of the preceding claims,
**characterized in that**
the safety related participant (22) is adapted to transmit a data message to the safety unit (10) when it is recognized by the evaluation unit (50) that the two signal transmission paths were together not interrupted or controlled for interruption due to an error, wherein the safety unit (10) is adapted to identify the error and/ or the defective safety related participant (22) by means of the data message.

9. A safety system in accordance with at least one of the preceding claims,
**characterized in that**
the safety related participant (22) comprises an interconnection module (26) connected to the protective device (24) of the safety related participant via which interconnection module the safety related participant (22) is integrated in the safety system.

10. A safety system in accordance with claim 9,
**characterized in that**
the first and/or the second interruptible signal transmission path of the safety related participant (22) comprise(s) a switch (96a, 96b) arranged in the protective device (24) which switch is integrated in the test signal path (36) via a forward line (98a, 98b) and a return line (100a, 100b), wherein the forward line (98a, 98b) and the return line (100a, 100b) are arranged in an interconnection line (28) connecting the protective device (24) and the interconnection module (26);
and/or **in that**
the first and/or the second interruptible signal transmission paths of the safety related participant (22) comprise(s) a switch (105a, 105b) arranged in the interconnection module (26) which switch is connected to the switching signal output of the protective device (24) controlling the interruption of the switch (105a, 105b) via a switching signal line, wherein the switching signal line is arranged in an interconnection line (28) connecting the protective device (24) and the interconnection module (26).

11. A safety system in accordance with claim 9 or claim 10,
**characterized in that**
the interconnection module (26) comprises a test signal input (106) for an incoming test signal and a test signal output (108) for an outgoing test signal, wherein the protective device (24) is connected to the interconnection module (26) via an interconnection line (28) and comprises two switches (96a, 96b) which are respectively connected to the interconnection module (26) via a forward line (98a, 98b) and a return line (100a, 100b) of the interconnection line (28) for the formation of the first and the second interruptible signal transmission paths;
wherein the interconnection module (26) comprises a test circuit (62) for the two signal transmission paths, said test circuit comprising a controlled current source (112), a controlled current sink (118) and a current direction element (120),
wherein the test signal input (106) of the interconnection module (26) is connected to a control input of the controlled current source (112) or of the controlled current sink (118) in such a way that the controlled current source (112) or current sink (118) can be controlled by the incoming test signal (80) or a signal (U₁₁₀) derived therefrom and wherein a controlled output of the same one of the current source (112) and the current sink (118) is connected to the forward line (96a) of the first switching path in order to transmit a current via the first switching path;
wherein a control input of the respective other one of the controlled current source (112) and the controlled current sink (118) is connected to the return line (100a) of the first signal transmission path in such a way that the controlled current source (112) or current sink (118) can be controlled by the current signal (I₁₁₂) transmitted via the signal transmission path or a signal (U₁₁₆) derived therefrom; wherein a controlled output of the other one of the controlled current source (112) and current sink (118) is connected to the forward line (98b) of the second switching path in order to transmit a current via the second switching path;
wherein the return line (100b) of the second switching path is connected to the current direction element (120) which is configured to provide a signal (U₁₂₀) dependent on the current transmitted via the second switching path; and
wherein the test signal output (108) of the interconnection module (26) is connected to the current direction element (120) in order to output the signal (U₁₂₀) generated by the current direction element (120) or a signal derived therefrom as an outgoing test signal of the safety related participant (22).

12. A safety system in accordance with at least one of the preceding claims,
**characterized in that**
the test signal path (36) is at least regionally arranged in a bus line (18) and the safety system comprises at least one further safety related participant (22) connected to the bus line (18), said safety related participant comprising a protective device (24), wherein the safety related participants (22) form the test signal path (36) together with the bus line (18), wherein the test signal path (36) has a forward path (38) connected to the output (X1) of the safety unit (10) and has a return path (40) connected to the safety input (I1) of the safety unit (10);
wherein the safety related participants (22) are arranged along the bus line (18) in a line in such a way that both the forward path (38) and the return path (40) of the test signal path (36) run through the same safety related participants (22); and wherein the safety related participants (22) are adapted in such a way that the presence of a non-secure state of their protective device (24) brings about an interruption of the test signal path (36); and
wherein the safety system further comprises a termination element (32) connected at the end of the line and connecting the forward path (38) and the return path (40) of the test signal path (36); wherein the safety unit (10) is configured to transmit an output signal at its output (X1) connected to the forward path (38); and wherein the termination element (32) is configured to receive the output signal from the forward path (38) and to output a test signal to the return path of the test signal path, said test signal being changed with respect to the received output signal in dependence on the output signal received from the forward path (38).

13. A safety related participant (22) for use in a safety system in accordance with at least one of the preceding claims, comprising
- a protective device (24);
- a first and a second interruptible signal transmission path which can together be interrupted on the occurrence of a non-secure state of the protective device (24);
- at least one test signal path (36) which comprises at least one of the first and the second interruptible signal transmission paths and which is arranged between a test signal input (106) and a test signal output (108) of the safety related participant (22); and
- an evaluation unit (50);
wherein the evaluation unit (50) is connected to the first signal transmission path and/or to a first switching signal output of the protective device (24) controlling the interruption of the first signal transmission path, wherein the evaluation unit (50) is connected to the second signal transmission path and/or to a second switching signal output of the protective device (24) controlling the interruption of the first signal transmission path; and wherein the evaluation unit (50) is adapted to check whether the first and the second signal transmission paths together are interrupted or controlled for interruption,
**characterized in that**
the two interruptible signal transmission paths of the safety related participant (22) are electrically connected in series to one another in the test signal path (36),
**in that** the safety related participant comprises an interruption switch (66) arranged in the test signal path (36) and electrically connected in series to the first and the second signal transmission paths,
and **in that** the evaluation unit (50) is configured to open the interruption switch (66) when the first and the second interruptible signal transmission paths together are not interrupted or controlled for interruption.

14. An interconnection module (26) for a safety related participant for use in a safety system in accordance with any one of the preceding claims 1 to 12, comprising
- an interruptible and/or interrupted test signal path (36) which is arranged between a test signal input (106) and a test signal output (108) of the interconnection module (26);
- two connections, wherein a connection is respectively configured either for the serial integration of an interruptible signal transmission path (96a, 96b) of a protective device (24) in the test signal path (36) or for the connection to a switching signal line connectible to a switching signal output of a protective device (24) and which connections are connected to a control input of an interruptible signal transmission path (105a, 105b) of the interconnection module (26) arranged in the test signal path (36) in such a way that the interruptible signal transmission path (105a, 105b) can be interrupted in dependence on an incoming switching signal at the connection; and
an evaluation unit (50) which is connected to the two connections and which is adapted, on use of the interconnection module (26) in the safety system, to check whether the controllable interruptible signal transmission paths (96a, 96b, 105a, 105b) respectively integrated in the test signal path (36) via the two connections or through a switching signal output connected to the connections together are interrupted or controlled for interruption, **characterized in that**
the two interruptible signal transmission paths (96a, 96b, 105a, 105b) integrated in the test signal path (36) via the two connections or through a switching signal output connected to the connection are electrically connected in series to one another in the test signal path (36),
**in that** the interconnection module comprises an interruption switch (66) arranged in the test signal path (36) and electrically connected in series to the first and the second signal transmission paths,
and **in that** the evaluation unit (50) is configured to open the interruption switch (66) when the interruptible signal transmission paths (96a, 96b, 105a, 105b) are together not interrupted or controlled for interruption.

## Revendications

1. Système de sécurité comprenant
- une unité de sécurité (10), en particulier une commande de sécurité,
- au moins un participant de sécurité (22), qui inclut un appareil de protection (24), et un premier et un second trajet de transmission de signal susceptibles d'être interrompus, qui peuvent être interrompus conjointement lors de l'apparition d'un état non sûr de l'appareil de protection (24),
- au moins un trajet de signal test (36) qui, partant d'une sortie (X1) de l'unité de sécurité (10), s'étend à travers ledit au moins un participant de sécurité (22) jusqu'à une entrée de sécurité (I1) de l'unité de sécurité (10), et inclut au moins un du premier et du second trajet de transmission de signal susceptibles d'être interrompus,
dans lequel le participant de sécurité (22) inclut une unité d'évaluation (50), qui est reliée au premier trajet de transmission de signal et/ou à une première sortie de signal de commutation, commandant l'interruption du premier trajet de transmission de signal, de l'appareil de protection (24), qui est relié au second trajet de transmission de signal et/ou à une seconde sortie de signal de commutation, commandant l'interruption du premier trajet de transmission de signal, de l'appareil de protection (24), et qui est conçu pour contrôler si le premier trajet de transmission de signal et le second trajet de transmission de signal sont interrompus conjointement ou sont pilotés en vue d'une interruption,
**caractérisé en ce que**
les deux trajets de transmission de signal susceptibles d'être interrompus du participant de sécurité (22) sont branchés électriquement l'un à l'autre en série dans le trajet de signal test (36),
**en ce que** le participant de sécurité (22) inclut un commutateur d'interruption (66) agencé dans le trajet de signal test (36) et branché électriquement en série avec le premier et le second trajet de transmission de signal,
et **en ce que** l'unité d'évaluation (50) est conçue pour ouvrir le commutateur d'interruption (66) quand le premier et le second trajet de transmission de signal susceptibles d'être interrompus ne sont pas interrompus conjointement ou ne sont pas pilotés en vue d'une interruption.

2. Système de sécurité selon la revendication 1,
**caractérisé en ce que** l'un au moins des trajets de transmission de signal susceptibles d'être interrompus du participant de sécurité est branché électriquement en série avec un trajet de transmission de signal susceptible d'être interrompu, agencé dans le trajet de signal test (36), d'un autre participant de sécurité (22) du système de sécurité.

3. Système de sécurité selon l'une au moins des revendications précédentes,
**caractérisé en ce que** l'unité d'évaluation (50) est réalisée pour contrôler si les deux trajets de transmission de signal sont simultanément interrompus, à un temps d'écart prédéterminé près, ou sont pilotés en vue d'une interruption, et/ou
**en ce que** l'unité d'évaluation (50) est réalisée pour contrôler si les deux trajets de transmission de signal de l'appareil de protection (24) sont simultanément fermés, à un temps d'écart prédéterminé près, ou sont pilotés en vue d'une interruption.

4. Système de sécurité selon l'une au moins des revendications précédentes,
**caractérisé en ce que** le premier et/ou le second trajet de transmission de signal susceptibles d'être interrompus inclut un trajet de commutation électrique avec un commutateur électrique ou électronique (96a, 96b, 105a, 105b) ou un trajet de transmission de signal optique susceptible d'être interrompu.

5. Système de sécurité selon l'une au moins des revendications précédentes,
**caractérisé en ce que** l'unité d'évaluation (50) du participant de sécurité (22) est conçue pour, après l'ouverture du commutateur d'interruption (66), fermer à nouveau le commutateur d'interruption (66) uniquement après un rapport d'erreur.

6. Système de sécurité selon l'une au moins des revendications précédentes,
**caractérisé en ce que** le rapport d'erreur est susceptible d'être exécuté par une entrée effectuée par un utilisateur au niveau du participant de sécurité (22), et/ou **en ce que** l'unité d'évaluation (50) est conçu pour surveiller s'il se produit au niveau du participant de sécurité (22) une séquence de commutation ordonnée complète du premier et du second trajet de transmission de signal susceptibles d'être interrompus, et dans ce cas pour faire un rapport de l'erreur.

7. Système de sécurité selon l'une au moins des revendications précédentes,
**caractérisé en ce que** le participant de sécurité (22) inclut une unité de notification, qui est réalisée pour, en fonction de la vérification exécutée par l'unité d'évaluation quant à savoir si les deux trajets de transmission de signal sont interrompus conjointement ou sont pilotés en vue d'une interruption, engendrer au niveau du participant de sécurité (22) une notification perceptible par un utilisateur.

8. Système de sécurité selon l'une au moins des revendications précédentes,
**caractérisé en ce que** le participant de sécurité (22) est conçu pour envoyer à l'unité de sécurité (10) un message de données si l'unité d'évaluation (50) a reconnu que les deux trajets de transmission de signal ne sont pas conjointement interrompus ou ne sont pas pilotés en vue d'une interruption en raison d'une erreur, et l'unité de sécurité (10) est conçue pour, au moyen du message de données, identifier l'erreur et/ou le participant de sécurité (22) présentant une erreur.

9. Système de sécurité selon l'une au moins des revendications précédentes,
**caractérisé en ce que** le participant de sécurité (22) inclut un module de sélection (26) au moyen duquel le participant de sécurité (22) est intégré dans le système de sécurité.

10. Système de sécurité selon la revendication 9,
**caractérisé en ce que**
le premier et/ou le second trajet de transmission de signal susceptibles d'être interrompus du participant de sécurité (22) inclut un commutateur (96a, 96b) agencé dans l'appareil de protection (24), qui est intégré dans le trajet de signal test (36) via une ligne d'arrivée (98a, 98b) et une ligne de retour (100a, 100b), dans lequel la ligne d'arrivée (98a, 98b) et la ligne de retour (100a, 100b) sont agencées dans une ligne de sélection (28) qui relie l'appareil de protection (24) et le module de sélection (26), et/ou
**en ce que** le premier et/ou le second trajet de transmission de signal susceptibles d'être interrompus du participant de sécurité (22) inclut un commutateur (105a, 105b) agencé dans le module de sélection (26), qui est relié via une ligne de signal de commutation à une sortie de signal de commutation, commandant l'interruption du commutateur (105a, 105b), de l'appareil de protection (24), dans lequel la ligne de signal de commutation est agencée dans une ligne de sélection (28) qui relie l'appareil de protection (24) et le module de sélection (26).

11. Système de sécurité selon la revendication 9 ou 10,
**caractérisé en ce que** le module de sélection (26) inclut une entrée de signal test (106) pour un signal test entrant et une sortie de signal test (108) pour un signal test sortant, dans lequel l'appareil de protection (24) est relié au module de sélection (26) via une ligne de sélection (28) et inclut deux commutateurs (96a, 96b), qui sont reliés au module de sélection (26) respectivement via une ligne d'arrivée (98a, 98b) et une ligne de retour (100a, 100b) de la ligne de sélection (28) pour former le premier et le second trajet de transmission de signal susceptibles d'être interrompus,
dans lequel le module de sélection (26) inclut un circuit test (62) pour les deux trajets de transmission de signal, qui inclut une source de courant commandée (112), un consommateur de courant commandé (118) et un élément à direction de courant (120),
dans lequel l'entrée de signal test (106) du module de sélection (26) est reliée à une entrée de commande de la source de courant commandée (112) ou du consommateur de courant commandé (118), de sorte que la source de courant commandée (112) ou le consommateur de courant commandé (118) est susceptible d'être piloté par le signal de test entrant (80) ou par un signal (U₁₁₀) dérivé de celui-ci, et une sortie commandée de cette même source de courant (112) ou de ce même consommateur de courant (118) est reliée à la ligne d'arrivée (96a) du premier trajet de commutation, afin de transmettre un courant via le premier trajet de commutation,
dans lequel une entrée de commande de l'autre élément respectif parmi la source de courant commandée (112) et le consommateur de courant commandé (118) est reliée à la ligne de retour (100a) du premier trajet de transmission de signal, de sorte que la source de courant commandée (112) ou le consommateur de courant commandé (118) est susceptible d'être piloté par le signal de courant (I₁₁₂) transmis via le premier trajet de transmission de signal, ou un signal (U₁₁₆) dérivé de celui-ci, dans lequel une sortie commandée de l'autre élément parmi la source de courant commandée (112) et le consommateur de courant commandé (118) est reliée à la ligne d'arrivée (98b) du second trajet de commutation afin de transmettre un courant via le second trajet de commutation,
dans lequel la ligne de retour (100b) du second trajet de commutation est reliée à l'élément à direction de courant (120), lequel est réalisé pour livrer un signal (U₁₂₀) dépendant du courant transmis via le second trajet de commutation, et
dans lequel la sortie de signal test (108) du module de sélection (26) est reliée à l'élément à direction de courant (120), afin de délivrer le signal (U₁₂₀) engendré par l'élément à direction de courant (120) ou un signal dérivé de celui-ci, à titre de signal de test sortant du participant de sécurité (22).

12. Système de sécurité selon l'une au moins des revendications précédentes,
**caractérisé en ce que**
le trajet de signal test (36) est agencé au moins localement dans une ligne de bus (18) et le système de sécurité inclut au moins un autre participant de sécurité (22), raccordé à la ligne de bus (18), qui comprend un appareil de protection (24), de sorte que le participant de sécurité (22) forme avec la ligne de bus (18) le trajet de signal test (36), ledit trajet de signal test (36) comprenant un trajet de ligne d'arrivée (38) relié à la sortie (X1) de l'unité de sécurité (10) et un trajet de ligne de retour (40) relié à l'entrée de sécurité (I1) de l'unité de sécurité (10),
dans lequel les participants de sécurité (22) sont agencés le long de la ligne de bus (18) dans une ligne de telle façon que le trajet de ligne d'arrivée (38) tout comme le trajet de ligne de retour (40) du trajet de signal test (36) traversent les mêmes participants de sécurité (22), et dans lequel les participants de sécurité (22) sont conçus de telle manière que la présence d'un état non sûr de leur appareil de sécurité (24) provoque une interruption du trajet de signal test (36), et le système de sécurité inclut en outre un élément de terminaison (32) branché à l'extrémité de la ligne et reliant le trajet d'arrivée (38) et le trajet de ligne de retour (40) du trajet de signal test (36),
dans lequel l'unité de sécurité (10) est réalisée pour émettre un signal de sortie au niveau de sa sortie (X1) reliée au trajet de ligne d'arrivée (38), et
dans lequel l'élément de terminaison (32) est réalisé pour recevoir le signal de sortie depuis le trajet de ligne d'arrivée (38) et, en fonction du signal de sortie reçu depuis le trajet de ligne d'arrivée (38), pour émettre un signal test modifié par rapport au signal de sortie reçu au niveau du trajet de ligne de retour du trajet de signal test.

13. Participant de sécurité (22) à utiliser dans un système de sécurité selon l'une au moins des revendications précédentes, comprenant
- un appareil de protection (24),
- un premier et un second trajet de transmission de signal susceptibles d'être interrompus, qui peuvent être interrompus conjointement lors de l'apparition d'un état non sûr de l'appareil de protection (24),
- au moins un trajet de signal test (36), qui inclut au moins un parmi le premier et le second trajet de transmission de signal susceptible d'être interrompu, et qui est agencé entre une entrée de signal test (106) et une sortie de signal test (108) du participant de sécurité (22), et
- une unité d'évaluation (50),
dans lequel l'unité d'évaluation (50) est reliée au premier trajet de transmission de signal et/ou à une première sortie de signal de commutation, commandant l'interruption du premier trajet de transmission de signal, de l'appareil de protection (24), ladite unité d'évaluation (50) étant reliée au second trajet de transmission de signal et/ou à une seconde sortie de signal de commutation, commandant l'interruption du premier trajet de transmission de signal, de l'appareil de protection (24), et dans lequel l'unité d'évaluation (50) est conçue pour contrôler si le premier et le second trajet de transmission de signal sont interrompus conjointement ou sont pilotés en vue d'une interruption,
**caractérisé en ce que**
les deux trajets de transmission de signal susceptibles d'être interrompus du participant de sécurité (22) sont branchés l'un à l'autre électriquement en série dans le trajet de signal test (36),
**en ce que** le participant de sécurité inclut un commutateur d'interruption (66) agencé dans le trajet de signal test (36) et branché électriquement en série avec le premier et le second trajet de transmission de signal, et
**en ce que** l'unité d'évaluation (50) est conçue pour ouvrir le commutateur d'interruption (66) quand le premier et le second trajet de transmission de signal susceptibles d'être interrompus ne sont pas conjointement interrompus ou ne sont pas conjointement pilotés en vue d'une interruption.

14. Module de sélection (26) pour un participant de sécurité et destinée à être utilisé dans un système de sécurité selon l'une au moins des revendications 1 à 12,
comprenant
- un trajet de signal test (36) susceptible d'être interrompu et/ou interrompu, qui est agencé entre une entrée de signal test (106) et une sortie de signal test (108) du module de sélection (26),
- deux raccordements, un des raccordements respectif étant réalisé soit pour l'intégration en série d'un trajet de transmission de signal (96a, 96b) susceptible d'être interrompu d'un appareil de protection (24) dans le trajet de signal test (36), soit pour la liaison à une ligne de signal de commutation susceptible d'être reliée à une sortie de signal de commutation d'un appareil de protection (24), et étant reliée à une entrée de commande d'un trajet de transmission de signal (105a, 105b) susceptible d'être interrompu, agencé dans le trajet de signal test (36), du module de sélection (26), de sorte que le trajet de transmission de signal susceptible d'être interrompu (105a, 105b) est capable d'être interrompu en fonction d'un signal de commutation arrivant au niveau du raccordement, et
- une unité d'évaluation (50), qui est reliée aux deux raccordements et qui est conçue pour, lors de l'utilisation du module de sélection (26) dans le système de sécurité, contrôler si les deux trajets de transmission de signal susceptibles d'être interrompus (96a, 96b, 105a, 105b), intégrés via les deux raccordements respectivement dans le trajet de signal test (36) ou bien sélectionnés via une sortie de signal de commutation reliée au raccordement, sont conjointement interrompus ou sont pilotés conjointement en vue d'une interruption,
**caractérisé en ce que** les deux trajets de transmission de signal susceptibles d'être interrompus (96a, 96b, 105a, 105b) intégrés via les deux raccordements dans le trajet de signal test (36) ou susceptibles d'être pilotés via une sortie de signal de commutation reliée aux raccordements, sont branchés l'un à l'autre électriquement en série dans le trajet de signal test (36),
**en ce que** le module de sélection inclut un commutateur d'interruption (66) agencé dans le trajet de signal test (36) et branché électriquement en série avec le premier et le second trajet de transmission de signal,
et **en ce que** l'unité d'évaluation (50) est conçue pour ouvrir le commutateur d'interruption (66) si les trajets de transmission de signal susceptibles d'être interrompus (96a, 96b, 105a, 105b) ne sont pas conjointement interrompus ou ne sont pas pilotés conjointement en vue d'une interruption.
